# EUROPEAN PATENT SPECIFICATION

(11) **EP 2 544 417 B1**
(45) Date of publication and mention of the grant of the patent: **12.11.2014**
(21) Application number: 11750319.3
(22) Date of filing: 17.02.2011
(51) Int. Cl.: H04L 12/751, H04L 12/937

(54) **COMMUNICATION SYSTEM, PATH CONTROL APPARATUS, PACKET FORWARDING APPARATUS AND PATH CONTROL METHOD**
KOMMUNIKATIONSSYSTEM, PFADSTEUERUNGSVORRICHTUNG, PAKETWEITERLEITUNGSVORRICHTUNG UND PFADSTEUERUNGSVERFAHREN
SYSTÈME DE COMMUNICATION, APPAREIL DE COMMANDE DE VOIE, APPAREIL D'ACHEMINEMENT DE PAQUET ET PROCÉDÉ DE COMMANDE DE VOIE

(30) Priority: 05.03.2010 JP 2010048884
(43) Date of publication of application: 09.01.2013
(73) Proprietor: NEC Corporation, Tokyo 108-8001 (JP)
(72) Inventor: AKIYOSHI, Ippei, Tokyo 108-8001 (JP)
(74) Representative: Robson, Aidan John
(86) International application number: PCT/JP2011/000874
(87) International publication number: WO 2011/108205

(56) References cited:
- WO-A2-2009/042919
- JP-A- 2001 230 805
- JP-A- 2004 254 270
- Ben Pfaff et al.: "OpenFlow Switch Speci cation Version 1.0.0 ( Wire Protocol 0x01 )", , 31 December 2009 (2009-12-31), pages 1-42, XP055076273, Retrieved from the Internet: URL:http://archive.openflow.org/documents/ openflow-spec-v1.0.0.pdf [retrieved on 2013-10-02]
- Nick McKeown ET AL: "OpenFlow: Enabling Innovation in Campus Networks", , 14 March 2008 (2008-03-14), pages 1-6, XP055002028, Retrieved from the Internet: URL:http://www.openflow.org/documents/open flow-wp-latest.pdf [retrieved on 2011-07-05]
- YOICHI HATANO: 'An Efficient Measurement Flow Placement for QoS Degradation Locating on OpenFlow-based Network' IEICE TECHNICAL REPORT vol. 109, no. 448, 25 February 2010, pages 25 - 30, XP008164079
- YUSUKE SHINOHARA: 'An Efficient Multipath Routing Algorithm for Datacenter Networks and its Implementation on OpenFlow-based Network' IEICE TECHNICAL REPORT vol. 109, no. 448, 25 February 2010, pages 13 - 18, XP008163155

## Description

### Technical Field

The present invention relates to a communication system, a path control apparatus, a packet forwarding apparatus, a path control method, a path control program, and a program for the packet forwarding apparatus. Particularly, the present invention relates to a communication system including packet forwarding apparatuses for forwarding a packet and a path control apparatus for controlling the packet forwarding of the packet forwarding apparatus to control a communication path, and the path control apparatus, the packet forwarding apparatuses, a path control method, a path control program, and a program for the packet forwarding apparatuses, which are applied to the communication system.

### Background Art

Examples of communication systems including flow switches for forwarding a packet and a path control apparatus for controlling the packet forwarding of the flow switches to control a communication path are described in Patent Literature (PTL) 1 and Non-patent Literatures (NPLs) 1 and 2. NPL 2 also describes that a path control apparatus defines flow entry information to be applied to the flow switches and provides a timer value so that each flow switch will operate according to the timer value in a timed manner.

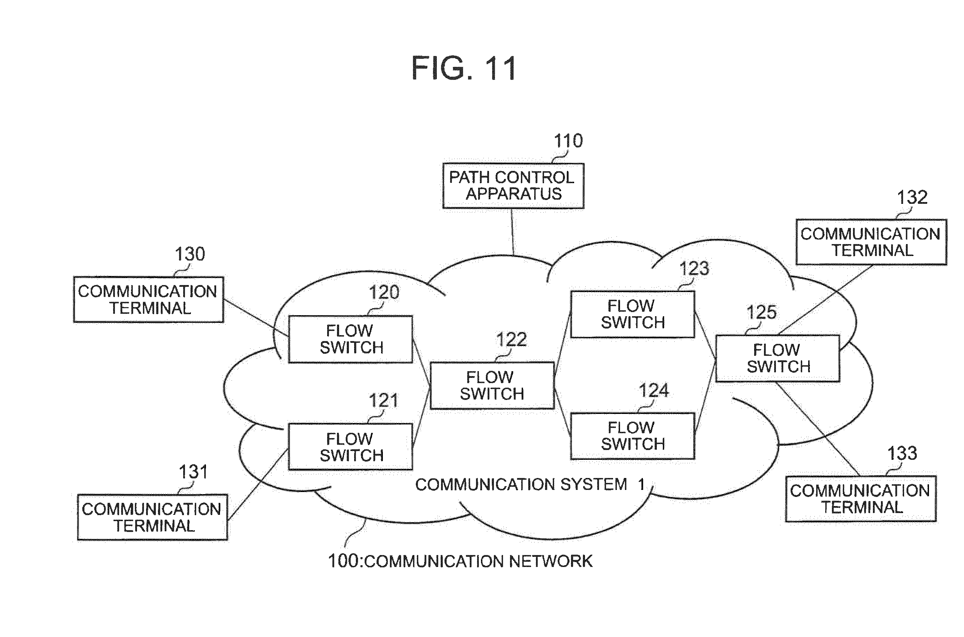

An example of a typical configuration of such communication systems is shown in FIG. 11. The communication system illustrated in FIG. 11 includes a path control apparatus 110 and flow switches 120 to 125 belonging to a communication network 100. A protocol for allowing the path control apparatus to control the flow switches is called OpenFlow.

The path control apparatus 110 sets flow entry information in each of the flow switches 120 to 125. The flow entry information is information for defining the operation of the flow switch according to an incoming packet. The flow entry information can also be called a packet forwarding rule. The path control apparatus 110 sets the flow entry information in each of the flow switches 120 to 125 to perform path control for communication among communication terminals 130 to 133 connected to the communication network 100.

The path control apparatus 110 has a network topology management function, a communication terminal position managing function, a flow entry generation function, a path calculation function, and a flow switch management function.

The network topology management function is a function to store information representing a network topology formed by a flow switch group based on information collected from the flow switches.

The flow entry generation function is a function to create flow entry information. The flow entry generation function allows the path control apparatus 110 to decide on classification information, action information, and a timer value so as to create flow entry information including these pieces of information. The classification information is information for identify a flow, which is represented, for example, as a requirement for a packet belonging to the flow. Based on the classification information, it is determined to which flow a packet received by a flow switch belongs. The action information is information indicative of the operation of the flow switch according to the flow (e.g., forwarding to a specific port, flooding, discarding, or the like). The timer value is a value defining the valid period of the flow entry information. The path control apparatus 110 includes the timer value in the action information to create, for each flow, the flow entry information including the classification information and the action information.

The path calculation function is a function to calculate a communication path for a packet flow.

The flow switch management function is a function to control the flow switches. Specifically, the flow switch management function is a function to initialize the flow switches or set a flow entry for a flow switch. Further, a function for flow analysis (step S202) to be described later upon receiving a new flow detection notification from a flow switch is also included in the flow switch management function.

The flow switches 120 to 125 are packet forwarding apparatuses for forwarding a received packet based on the flow entry information set by the path control apparatus 110. When receiving a packet, the flow switches 120 to 125 determine, according to the classification information, to which flow the packet belongs, and perform, on the packet, processing indicated by the action information in the flow entry information defined for the flow. For example, according to the flow of the received packet, the flow switches 120 to 125 forward the packet to a specific port, perform flooding on the packet, or discard the packet. The flow switches create statistical information on the received packet or the like.

Further, the flow switches 120 to 125 decrease the timer value included in the action information of the flow entry information over time (i.e., counting down the timer value), and when receiving a new packet, reset, to the initial value, the timer value for the flow entry to which the packet belongs. When the timer value becomes zero, the flow switches 120 to 125 delete the flow entry information. There is also a form in which the flow switches 120 to 125 do not reset the timer value.

Links of each of the flow switches 120 to 125 to other nodes (other flow switches or communication terminals) are all built by Ethernet (registered trademark).

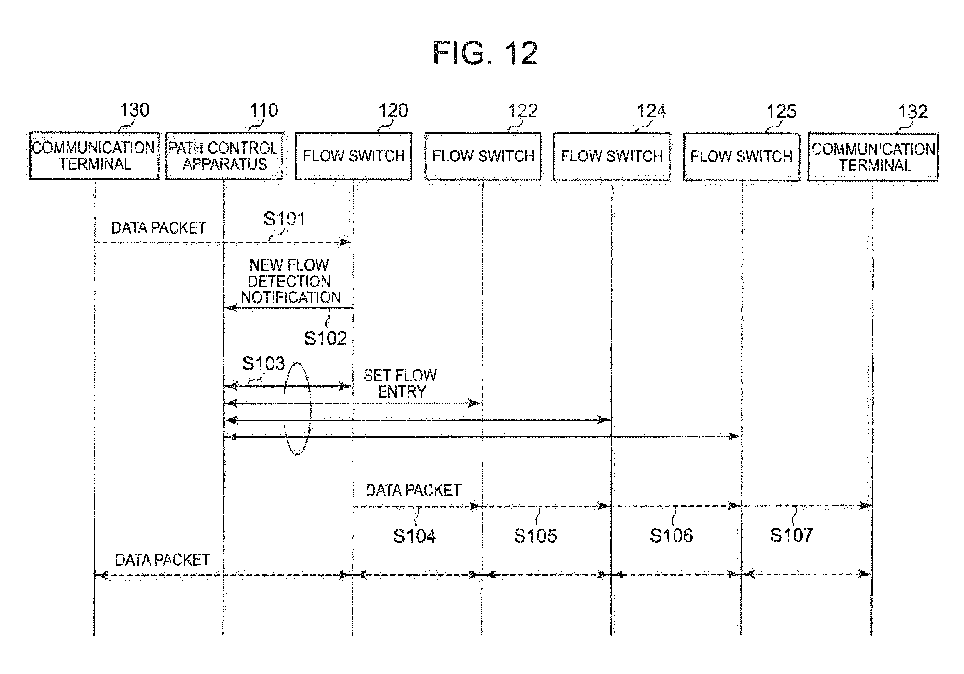

FIG. 12 is an explanatory drawing showing an example of the course of processing performed in the communication system illustrated in FIG. 11. Here, description will be made by taking, as an example, a case where the communication terminal 130 shown in FIG. 11 transmits a packet to the communication terminal 132.

The communication terminal 130 transmits the packet to the communication terminal 132 (step S101). This packet is delivered to a flow switch 120 connected to the communication terminal 130.

When receiving the packet, the flow switch 120 searches for flow entry information adapted to the received packet from among the pieces of flow entry information set in the flow switch 120 itself. However, when the flow switch 120 received the packet transmitted from the communication terminal 130 to the communication terminal 132 for the first time, no flow entry information adapted to the packet is set. Therefore, the flow switch 120 buffers the received packet in step S101 and transmits, to the path control apparatus 110, a notification (referred to as a new flow detection notification) indicating that a new flow has been detected (step S102). The flow switch 120 includes, in this new flow detection notification, information for creating classification information to identify the new flow and information for deciding on a path from the source terminal to the destination terminal. For example, as these pieces of information, the flow switch 120 transmits a new flow detection notification including MAC (Media Access Control) addresses, IP addresses, and port numbers of both the source terminal and the destination terminal, and a received packet receiving port number at which the flow switch 120 received the data packet.

Here, the case where the flow switch 120 buffers the received data packet, extracts information for creating classification information for identifying a new flow and information for deciding on a path from the source to the destination, and transmits these pieces of information to the path control apparatus 110 is taken as an example, but the flow switch 120 may transmit the received data packet itself to the path control apparatus 110.

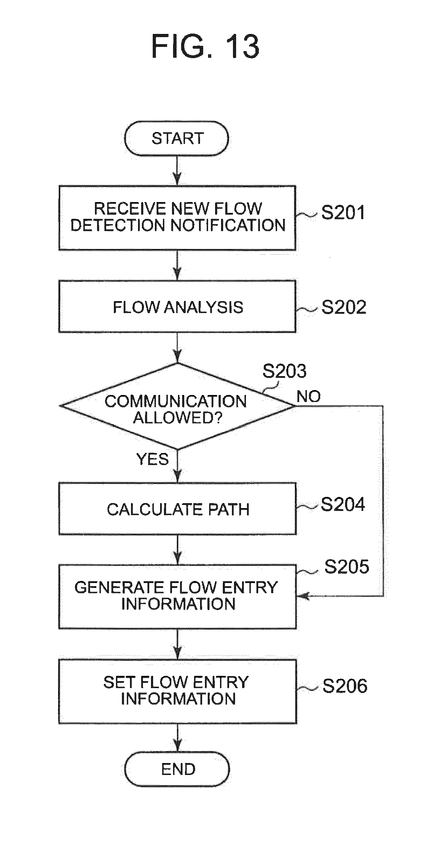

When receiving the new flow detection notification, the path control apparatus 110 creates flow entry information on the new flow and set it in the flow switch (step S103). FIG. 13 is a flowchart showing an example of the course of processing performed by the path control apparatus 110 that received the new flow detection notification, i.e., FIG. 13 is a flowchart showing an example of the course of processing in step S103.

When receiving the new flow detection notification from the flow switch (step S201), the path control apparatus 110 analyzes the new flow detected by the flow switch (step S202). Specifically, the analysis processing in step S202 is processing for determining communication terminals or the kind of application software used on the communication terminals based on information on IP addresses or port numbers obtained by referring in turn to an Ethernet header, an IP header, a transport layer protocol (TCP (Transmission Control Protocol) or UDP (User Datagram Protocol)) header. Then, in this analysis processing in step S202, it is assumed that links of each of the flow switches 120 to 125 to other nodes (other flow switches or communication terminals) are all built by Ethernet.

After step S201, the path control apparatus 110 determines whether to allow the communication of a newly generated flow (step S203). When determining that the communication will be allowed (Yes in step S203), the path control apparatus 110 calculates a path suitable for the kind of application software as the path for the new flow (step S204), and creates flow entry information so that the flow will pass through the calculated path (step S205). For example, a node to which a packet is to be forwarded next is defined for each flow switch on the path to create flow entry information in which classification information on the new flow is associated with action information indicating the forwarding to the node. Then, the path control apparatus 110 transmits the flow entry information created for each flow switch to each flow switch on the path to set the flow entry information (step S206).

On the other hand, when determining in step S203 that the communication will not be allowed (No in step S203), the path control apparatus 110 creates flow entry information indicative of classification information on the new flow and discarding of the packet belonging to the new flow (step S205) to set the flow entry information in the flow switch (step S206).

In the example shown in FIG. 12, it is shown a case where the path control apparatus 110 determines in step S203 that the communication of the flow will be allowed and defines in step S204 a path consisting of a flow switch 120, a flow switch 122, a flow switch 124, a flow switch 125, and a communication terminal 132. The path control apparatus 110 creates flow entry information respectively for the flow switches 120, 122, 124, and 125 on the path and sets the flow entry information (steps S205 and S206).

Upon completion of setting the flow entry information in the processing step S103 shown in FIG. 12 (steps S201 to S206 in FIG. 13), the flow switch 120 forwards a buffered packet according to the flow entry information. In other words, the flow switch 120 forwards the packet to the flow switch 122 according to action information in the flow entry information newly set (step S104).

The flow entry information adapted to this packet is set in each of the flow switches 122, 124, and 125 on the communication path defined by the path control apparatus 110. Therefore, the flow switches 122, 124, and 125 forward this packet sequentially according to the flow entry information (steps S 105 to S 107) so that this packet will be delivered to the communication terminal 132.

Since the setting of the flow entry related to the communication from the communication terminal 130 to the communication terminal 132 is completed, when the communication terminal 130 transmits any packet to the communication terminal 132 after this time, the flow switches 120, 122, 124, and 125 can forward the packet according to the flow entry information set in each flow switch without making inquiries to the path control apparatus 110.

Even when the communication terminal 132 transmits a packet to the communication terminal 130, the communication system can perform the same processing as mentioned above.

Further, Patent Literature (PTL) 2 discloses an invention for routing a specific type of frame using hardware to partially improve the efficiency of software. When the invention disclosed in PTL 2 is implemented as part of a Fibre Channel network architecture, a routing control/type (R_CTL/TYPE) field in a Fibre Channel frame header is used to map a received frame to a specific ring of a buffer in a host memory.

### Citation List

### Patent Literatures

PTL 1: Specification of US Patent Published Application No. 2008/0189769
PTL 2: Japanese Patent Published Application (Translation of PCT Application) No. 2002-513968

### Non Patent Literatures

NPL 1: Nick McKeown and seven others, "OpenFlow: Enabling Innovation in Campus Networks," March 14, 2008, online, http://www.openflowswitch.org//documents/openflow-wp-latest.pdf, searched on Nov. 24, 2009.
NPL 2: "OpenFlow switch Specification Version 0.9.0," Jul, 20, 2009, online, http://www.openflowswitch.org/documents/openflow-spec-v0.9.0.pdf, searched on Nov. 24, 2009.

### Summary of Invention

### Technical Problems

In the communication system shown in FIG. 11, the path control apparatus 110 analyzes application software used on communication terminals and calculates a communication path for a new flow on the assumption that links of each flow switch belonging to the communication network 100 are all built by Ethernet. Therefore, only the Ethernet link can be adopted as a link technique for each flow switch belonging to the communication network 100.

There are link techniques (e.g., Fibre Channel) between nodes other than the Ethernet. When two or more link techniques are used in each flow switch inside the communication network 100, the path control apparatus 110 cannot perform analysis processing in step S202 appropriately, and hence cannot calculate a path for the new flow properly.

Therefore, it is an object of the present invention to provide a communication system capable of defining a flow path properly even when there are two or more types of links of a packet forwarding apparatus that forms part of a communication network, and a path control apparatus, the packet forwarding apparatus, a path control method, a path control program, and a program for the packet forwarding apparatus, which are applied to the communication system.

### Solution to Problem

The communication system according to the present invention is characterized by including: multiple packet forwarding apparatuses for forwarding a received packet; and a path control apparatus for setting a packet forwarding rule in each packet forwarding apparatus to control a communication path for the packet, wherein each packet forwarding apparatus includes: information transmission means for transmitting, to the path control apparatus, at least an identifier of its own node, a port identifier of each port of the own node, and a type of link connected to each port of the own node; and new flow detection notification means for transmitting, to the path control apparatus, a new flow detection notification including information on the packet, the identifier of the own node, and the port identifier of a port at which the packet was received when no packet forwarding rule adapted to the received packet is registered, and the path control apparatus includes: packet forwarding apparatus information storing means for storing information received from the information transmission means of each packet forwarding apparatus; topology information storage means for storing topology information on the packet forwarding apparatus for each type of link connected to each port of the packet forwarding apparatus; link type determination means for determining a type of link through which the packet received by the packet forwarding apparatus passes when receiving a new flow detection notification from the packet forwarding apparatus, based on the identifier of the packet forwarding apparatus and the port identifier included in the new flow detection notification, and information stored in the packet forwarding apparatus information storing means; path calculation means for calculating a communication path for the packet based on topology information on the type of link determined by the link type determination means; rule generation means for generating a packet forwarding rule for each packet forwarding apparatus on the communication path; and rule transmission means for transmitting the generated packet forwarding rule to each packet forwarding apparatus on the communication path.

The path control apparatus according to the present invention is a path control apparatus for setting a packet forwarding rule in each packet forwarding apparatus to control a communication path for a packet, characterized by including: packet forwarding apparatus information storing means for storing, for each packet forwarding apparatus, at least an identifier of the packet forwarding apparatus, a port identifier of each port of the packet forwarding apparatus, and a type of link connected to each port of the packet forwarding apparatus; topology information storage means for storing topology information on the packet forwarding apparatus for each type of link connected to each port of the packet forwarding apparatus; link type determination means for determining a type of link through which the packet received by the packet forwarding apparatus passes when receiving, from the packet forwarding apparatus, a new flow detection notification including information on the new packet flow received by the packet forwarding apparatus, the identifier of the packet forwarding apparatus, and the port identifier of a port at which the packet was received, based on the identifier of the packet forwarding apparatus and the port identifier included in the new flow detection notification, and information stored in the packet forwarding apparatus information storing means; path calculation means for calculating a communication path for the packet based on topology information on the type of link determined by the link type determination means; rule generation means for generating a packet forwarding rule for each packet forwarding apparatus on the communication path; and rule transmission means for transmitting the generated packet forwarding rule to each packet forwarding apparatus on the communication path.

The packet forwarding apparatus according to the present invention is a packet forwarding apparatus for forwarding a received packet according to a packet forwarding rule generated by a path control apparatus, characterized by including: information transmission means for transmitting, to the path control apparatus, at least an identifier of its own node, a port identifier of each port of the own node, and a type of link connected to each port of the own node; and new flow detection notification means for transmitting, to the path control apparatus, a new flow detection notification including information on the packet, the identifier of the own node, and the port identifier of a port at which the packet was received when no packet forwarding rule adapted to the received packet is registered.

The path control method according to the present invention is characterized by including: causing each of multiple packet forwarding apparatuses for forwarding a received packet to transmit, to a path control apparatus, at least an identifier of its own node, a port identifier of each port of the own node, and a type of link connected to each port of the own node; causing the path control apparatus for controlling each packet forwarding apparatus to store, for each packet forwarding apparatus, at least the identifier of the packet forwarding apparatus, the port identifier of each port of the packet forwarding apparatus, and the type of link connected to each port of the packet forwarding apparatus in packet forwarding apparatus information storing means; causing the packet forwarding apparatus to transmit, to the path control apparatus, a new flow detection notification including information on the packet, the identifier of the own node, and the port identifier of a port at which the packet was received when no packet forwarding rule adapted to the received packet is registered; and causing the path control apparatus to determine a type of link through which the packet received by the packet forwarding apparatus passes when receiving the new flow detection notification, based on the identifier of the packet forwarding apparatus and the port identifier included in the new flow detection notification, and information stored in the packet forwarding apparatus information storing means, calculate a communication path for the packet based on topology information on the type of link determined, generate a packet forwarding rule for each packet forwarding apparatus on the communication path, and transmit the generated packet forwarding rule to each packet forwarding apparatus on the communication path.

The path control program according to the present invention is a path control program installed on a computer for setting a packet forwarding rule in each packet forwarding apparatus to control a communication path for a packet, the path control program characterized by causing the computer to perform: information registration processing for storing, for each packet forwarding apparatus, at least an identifier of the packet forwarding apparatus, a port identifier of each port of the packet forwarding apparatus, and a type of link connected to each port of the packet forwarding apparatus in packet forwarding apparatus information storing means; link type determination processing for determining a type of link through which the packet received by the packet forwarding apparatus passes when receiving, from the packet forwarding apparatus, a new flow detection notification including information on the new packet flow received by the packet forwarding apparatus, the identifier of the packet forwarding apparatus, and the port identifier of a port at which the packet was received, based on the identifier of the packet forwarding apparatus and the port identifier included in the new flow detection notification, and information stored in the packet forwarding apparatus information storing means; path calculation processing for calculating a communication path for the packet based on topology information on the type of link determined in the link type determination processing; rule generation processing for generating a packet forwarding rule for each packet forwarding apparatus on the communication path; and rule transmission processing for transmitting the generated packet forwarding rule to each packet forwarding apparatus on the communication path.

The program for a packet forwarding apparatus, which is installed on a computer for forwarding a received packet according to a packet forwarding rule generated by a path control apparatus, the program characterized by causing the computer to perform: information transmission processing for transmitting, to the path control apparatus, at least an identifier of its own node, a port identifier of each port of the own node, and a type of link connected to each port of the own node; and new flow detection notification processing for transmitting, to the path control apparatus, a new flow detection notification including information on the packet, the identifier of the own node, and the port identifier of a port at which the packet was received when no packet forwarding rule adapted to the received packet is registered.

### Advantageous Effect of Invention

According to the present invention, even when there are two or more types of links of packet forwarding apparatuses that form a communication network, a flow path can be defined properly.

### Brief Description of Drawings

[FIG. 1] FIG. 1 is a block diagram showing an example of a communication system of the present invention.
[FIG. 2] FIG. 2 is a block diagram showing a configuration example of a path control apparatus of the present invention.
[FIG. 3] FIG. 3 is a block diagram showing a configuration example of a packet forwarding apparatus of the present invention.
[FIG. 4] FIG. 4 is an explanatory drawing showing an example of the course of processing upon initialization.
[FIG. 5] FIG. 5 is an explanatory drawing showing an example of the course of processing upon generation of topology information.
[FIG. 6] FIG. 6 is an explanatory drawing showing an example of the course of processing performed in the communication system when a packet is exchanged between communication terminals.
[FIG. 7] FIG. 7 is a flowchart showing an example of the course of processing performed by the path control apparatus that received a new flow detection notification.
[FIG. 8] FIG. 8 is a block diagram showing an example of the minimal configuration of a communication system of the present invention.
[FIG. 9] FIG. 9 is a block diagram showing an example of the minimal configuration of a path control apparatus of the present invention.
[FIG. 10] FIG. 10 is a block diagram showing an example of the minimal configuration of a packet forwarding apparatus of the present invention.
[FIG. 11] FIG. 11 is an explanatory drawing showing a configuration example of a typical communication system including flow switches and a path control apparatus.
[FIG. 12] FIG. 12 is an explanatory drawing showing an example of the course of processing in the communication system illustrated in FIG. 11.
[FIG. 13] FIG. 13 is a flowchart showing an example of the course of processing performed by the path control apparatus illustrated in FIG. 11.

### Description of Embodiment

A preferred exemplary embodiment of the present invention will now be described with reference to the accompanying drawings.

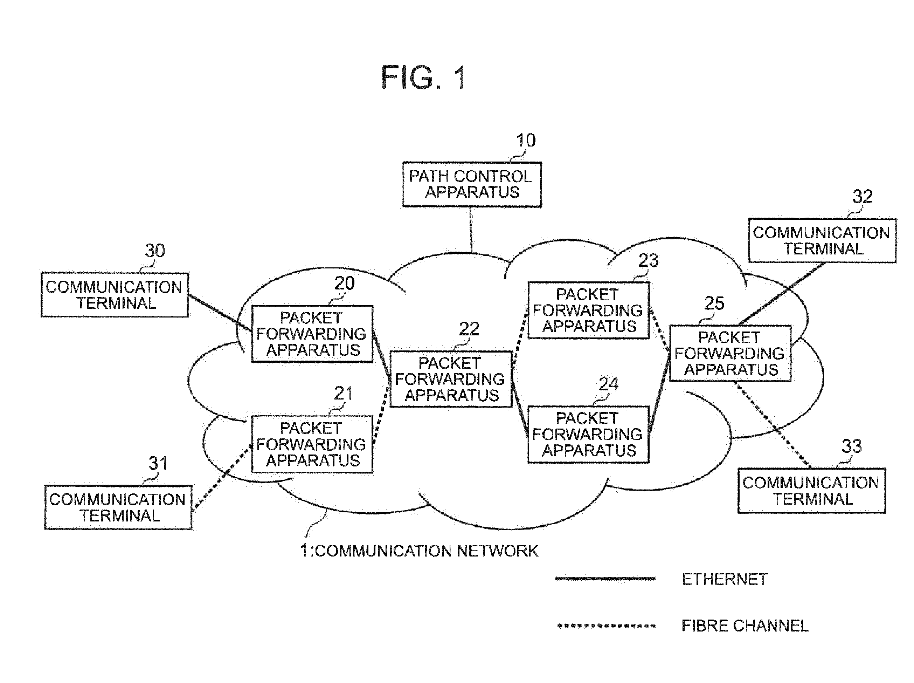

FIG. 1 is a block diagram showing an example of a communication system of the present invention. The communication system of the present invention includes a path control apparatus 10, and packet forwarding apparatuses 20 to 25 belonging to a communication network 1. In FIG. 1, six packet forwarding apparatuses 20 to 25 are shown, but the communication system in FIG. 1 is just an illustrative example, and the number of packet forwarding apparatuses and the topology are not limited to the example shown in FIG. 1. In the example shown in FIG. 1, a communication terminal 30 is connected to the packet forwarding apparatus 20, a communication terminal 31 is connected to the packet forwarding apparatus 21, and communication terminals 32 and 33 are connected to the packet forwarding apparatus 25. Then, each packet forwarding apparatus forwards a packet to be exchanged between communication terminals. Note that the number of communication terminals and to which packet forwarding apparatus a communication terminal is connected in the communication network 1 are not particularly limited.

The path control apparatus 10 is connected to each individual packet forwarding apparatus 20-25 through a dedicated control channel to exchange information between the path control apparatus 10 and each packet forwarding apparatus 20-25 through the dedicated control channel.

Further, in the present invention, the type of link between packet forwarding apparatuses and the type of link between a packet forwarding apparatus and a communication terminal are not limited to one type, they may be of two or more types. In the example shown in FIG. 1, it is shown a case where there are the Ethernet link and the Fibre Channel link as the types of links. For example, in the example shown in FIG. 1, a link between the packet forwarding apparatuses 20 and 22 and a link between the packet forwarding apparatus 20 and the communication terminal 30 are Ethernet links. Further, a link between the packet forwarding apparatuses 21 and 22 and a link between the packet forwarding apparatus 21 and the communication terminal 31 are Fibre Channel links In FIG. 1, it is shown the case where the types of links is two, but the types of links may be three or more. Further, any link technique other than Ethernet and Fibre Channel may be used.

Each packet forwarding apparatus 20-25 forwards a received packet to the following node under the control of the path control apparatus 10. Specifically, each packet forwarding apparatus 20-25 performs processing on the received packet according to a packet forwarding rule set by the path control apparatus 10. The packet forwarding rule is information for defining the operation of the packet forwarding apparatus upon receiving a packet.

The packet forwarding rule includes classification information for identifying a flow and action information on an action performed on a packet determined to belong to the flow identified by the classification information. The classification information is, for example, represented as a requirement that the packet belonging to the flow should meet, such as that "the destination MAC address and the destination IP address match the MAC address and the IP address of the communication terminal 3," but the way of representing the classification information is not particularly limited. Examples of the content of the action information include, for example, "forwarding a received packet to a specific port," "flooding," discarding," and the like, but the content of the action information is not limited thereto. Further, a timer value is included in the action information. The timer value is a value for defining a valid period of the packet forwarding rule. The packet forwarding rule includes the classification information, the action information, and the timer value, but it may further include any other information. In this example, description will be made on the case where the timer value is included in the action information, but the timer value may not need to be included in the action information as long as it is included in the packet forwarding rule.

The path control apparatus 10 generates a packet forwarding rule including classification information and action information according to the flow, and sets the packet forwarding rule in each of the packet forwarding apparatuses on the communication path for the flow.

Each packet forwarding apparatus 20-25 decreases the timer value included in the action information of the set packet forwarding rule over time (i.e., counting down the timer value), and when the timer value becomes zero, it deletes the packet forwarding rule. When receiving a packet adapted to the classification information in the packet forwarding rule, each packet forwarding apparatus 20-25 can reset the timer value in the packet forwarding rule to an initial value. Alternatively, each packet forwarding apparatus 20-25 can continue to count down the timer value without initialization of the timer value even when receiving such a packet.

The packet forwarding apparatuses 20 to 25 are, for example, flow switches in OpenFlow. The path control apparatus 10 is, for example, a path control apparatus in OpenFlow. The packet forwarding rule is, for example, flow entry information in OpenFlow.

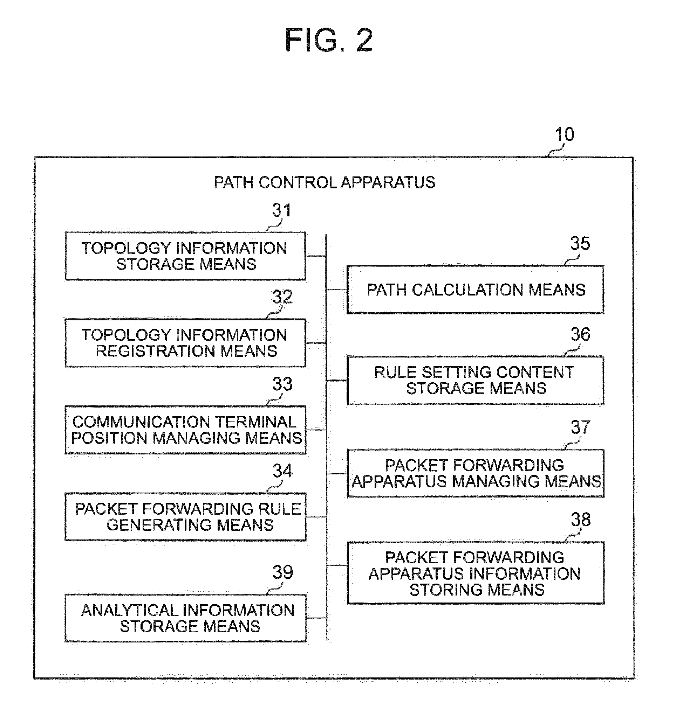

FIG. 2 is a block diagram showing a configuration example of the path control apparatus 10 of the present invention. The path control apparatus 10 includes topology information storage means 31, topology information registration means 32, communication terminal position managing means 33, packet forwarding rule generating means 34, path calculation means 35, rule setting content storage means 36, packet forwarding apparatus managing means 37, packet forwarding apparatus information storing means 38, and analytical information storage means 39.

The topology information storage means 31 is a storage device for storing topology information representing a network topology formed of a group of packet forwarding apparatuses. The topology information storage means 31 stores the topology information for each type of link. For example, as shown in FIG. 1, when there are the Ethernet link and the Fibre Channel link as the link types, the topology information storage means 31 stores topology information on a packet forwarding apparatus group connected via the Ethernet link and topology information on a packet forwarding apparatus group connected via the Fibre Channel link, respectively.

The topology information registration means 32 creates topology information for each link type based on information received from each packet forwarding apparatus, and stores the created topology information in the topology information storage means 31.

The communication terminal position managing means 33 performs management on to which port of which packet forwarding apparatus each communication terminal connected to the communication network 1 is connected. For example, when a terminal transmits any packet such as a DHCP (Dynamic Host Configuration Protocol) Request message, a packet forwarding apparatus connected to the communication terminal transmits, to the path control apparatus 10, information on to which port of the packet forwarding apparatus the communication terminal is connected. The communication terminal position managing means 33 just has to have these pieces of information.

The packet forwarding rule generating means 34 decides on classification information and action information to generate a packet forwarding rule including the classification information and the action information. The packet forwarding rule generating means 34 generates the packet forwarding rule for each packet forwarding apparatus on the communication path. Here, the packet forwarding rule generating means 34 provides common classification information for respective packet forwarding apparatuses on the communication path for the same flow. However, different action information can be defined for each packet forwarding apparatus.

Note that the packet forwarding rule generating means 34 generates no packet forwarding rule for a packet forwarding apparatus in which a packet forwarding rule including the same classification information as classification information on the communication path for a flow identified by the classification information has been already set.

The path calculation means 35 calculates a communication path for the flow. The path calculation means 35 refers to the topology information according to the link type identified from the packet flow and calculates a communication path using the topology information. For example, suppose that the link type identified from a new packet flow for which a communication path is to be calculated is the Fibre Channel link. In this case, the path calculation means 35 refers to topology information related to the Fibre Channel link from the pieces of topology information stored for each link type in the topology information storage means 31, and calculates a communication path using the topology information. At this time, the path calculation means 35 calculates a communication path according to the kind of application software used on the communication terminals to exchange the packet.

The rule setting content storage means 36 is a storage device for storing information indicating what kind of packet forwarding rule is set in which packet forwarding apparatus. Thus, the information indicating what kind of packet forwarding rule is set in which packet forwarding apparatus can be managed by the rule setting content storage means 36.

The packet forwarding apparatus managing means 37 manages each packet forwarding apparatus 20-25. Specifically, the packet forwarding apparatus managing means 37 performs processing for setting, in the packet forwarding apparatus, the packet forwarding rule generated by the packet forwarding rule generating means 34. Then, upon setting the packet forwarding rule in the packet forwarding apparatus, the packet forwarding apparatus managing means 37 stores, in the rule setting content storage means 36, information indicating what kind of packet forwarding rule is set in which packet forwarding apparatus.

Further, upon establishing a connection to the packet forwarding apparatus, the packet forwarding apparatus managing means 37 collects information from the packet forwarding apparatus, and stores the collected information in the packet forwarding apparatus information storing means 38. Here, processing in which a packet forwarding apparatus to which a connection is newly established sends information to the path control apparatus 10 and the path control apparatus 10 stores the information is referred to as initialization. In the present invention, the information collected upon initialization includes, for example, an identifier of each individual packet forwarding apparatus, a port identifier of each port of each individual packet forwarding apparatus, the type of link connected to each individual port, and information related to the link.

The packet forwarding apparatus information storing means 38 is a storage device for storing information collected by the packet forwarding apparatus managing means 37 from each packet forwarding apparatus 20-25 upon initialization processing for the packet forwarding apparatus. By referring to the information stored in the packet forwarding apparatus information storing means 38, each type of link and information related to the link can be determined.

Further, when information on a new packet flow is sent from a packet forwarding apparatus, the packet forwarding apparatus managing means 37 analyzes the kind of application software used on the communication terminals to exchange the packet based on the information on the packet. The packet forwarding apparatus managing means 3 7 just has to refer to information stored in the analytical information storage means 39 to perform analysis. It can be said that the analysis on the kind of application software used on the communication terminals is one aspect of analyzing the characteristics of the communication terminal.

The analytical information storage means 39 is a storage device for storing information for analyzing the kind of application software used on the communication terminals to exchange the packet. The analytical information storage means 39 stores information extracted from fields of the packet and information indicative of correspondences with the kind of application software. In other words, information indicative of what is the kind of application software used on the communication terminals at the time of what kind of information is extracted from the fields of the packet is stored. The analytical information storage means 39 just has to store, for each link type, the information extracted from the fields of the packet and the information indicative of the correspondences with the kind of application software. The fields of the packet to be referred to identify the kind of application software may be different from link type to link type.

The topology information registration means 32, the communication terminal position managing means 33, the packet forwarding the rule generating means 34, the path calculation means 35, and the packet forwarding apparatus managing means 37 are implemented, for example, by a CPU of a computer operating according to a path control program. In this case, a program storage device (not shown) of the computer stores the path control program, and the CPU reads the program so that the CPU will operate, according to the program, as the topology information registration means 32, the communication terminal position managing means 33, the packet forwarding rule generating means 34, the path calculation means 35, and the packet forwarding apparatus managing means 37. Each means may also be implemented in different hardware, respectively.

Further, the topology information storage means 31, the rule setting content storage means 36, the packet forwarding apparatus information storing means 38, and the analytical information storage means 39 may be implemented as the same storage device, or as different storage devices.

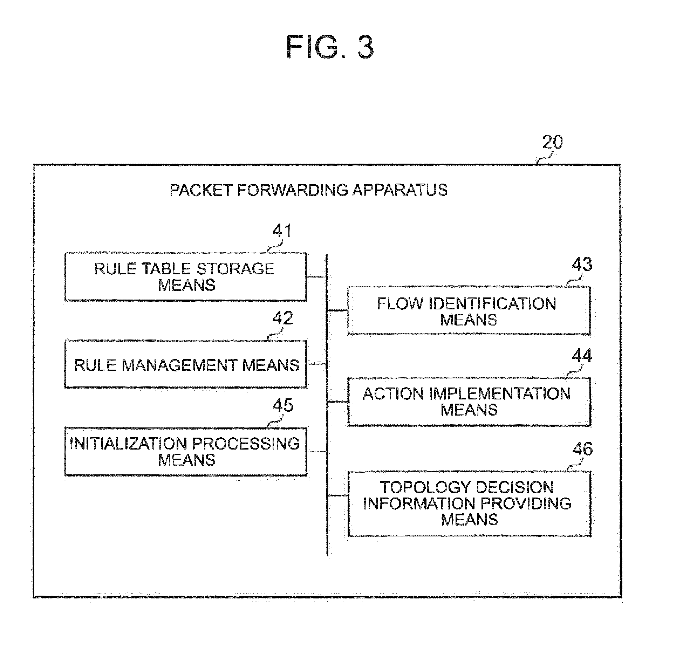

FIG. 3 is a block diagram showing a configuration example of a packet forwarding apparatus of the present invention. In FIG. 3, the packet forwarding apparatus 20 in FIG. 1 is taken as an example, but the other packet forwarding apparatuses 21 to 25 have the same configuration. The packet forwarding apparatus 20 includes rule table storage means 41, rule management means 42, flow identification means 43, action implementation means 44, initialization processing means 45, and topology decision information providing means 46.

The rule table storage means 41 is a storage device for storing a packet forwarding rule. Since different packet forwarding rules are set for different flows, it is not always true that the number of packet forwarding rules stored in the rule table storage means 41 is one. A set of packet forwarding rules stored in the rule table storage means 41 is referred to as a packet forwarding rule table.

The rule management means 42 manages each packet forwarding rule. For example, when the packet forwarding apparatus managing means 37 (see FIG. 2) of the path control apparatus 10 sets a packet forwarding rule in a packet forwarding apparatus, the packet forwarding rule is transmitted to the packet forwarding apparatus together with a setting instruction. In accordance with this instruction, the rule management means 42 stores, in the rule table storage means 41, the packet forwarding rule received from the path control apparatus 10.

Further, the rule management means 42 decreases a timer value specified in each packet forwarding rule stored in the rule table storage means 41 over time. Then, when the timer value becomes zero, the rule management means 42 deletes the packet forwarding rule including the timer value from the rule table storage means 41, and transmits information indicative thereof to the path control apparatus 10. When receiving this information, the packet forwarding apparatus managing means 37 (see FIG. 2) of the path control apparatus 10 deletes, from the rule setting content storage means 36 (see FIG. 2), the packet forwarding rule deleted from the rule table storage means 41 in the packet forwarding apparatus.

When receiving a packet from another node (e.g., a communication terminal or another packet forwarding apparatus), the flow identification means 43 searches the packet forwarding rule table stored in the rule table storage means 41 for a packet forwarding rule including classification information adapted to the packet. Failing in searching means that a packet belonging to a new flow other than the flow corresponding to the stored packet forwarding rule was received. In this case, the flow identification means 43 transmits, to the path control apparatus 10, a notification (new flow detection notification) indicating that a new flow has been detected. At this time, the flow identification means 43 includes, in the new flow detection notification, information capable of identifying a communication path for the flow, information capable of creating classification information, and information used for analyzing application software used on the communication terminals to exchange the packet belonging to the new flow. The flow identification means 43 also includes, in the new flow detection notification, an identifier of its own node (the packet forwarding apparatus 20 in the example shown in FIG. 3) and a port number of the own node at which the packet of the new flow was received.

Here, the information capable of identifying a communication path for the flow, the information capable of creating classification information, and the information used for analyzing application software used on the communication terminals to exchange the packet belonging to the new flow included in the new flow detection notification will be described.

The information capable of identifying a communication path for the flow is information capable of identifying a passage path for the new flow of the received packet. As an example of the information capable of identifying a communication path for the flow, there is address information on source and destination communication terminals at both endpoints of the communication path. However, when the packet is sent to another communication network through a gateway (not shown) in the communication network 1 (see FIG. 1), if there is only address information on the source communication terminal as one endpoint of the communication path, the communication path to the gateway can be identified. Thus, the address information on the source and destination communication terminals at both endpoints of the communication path is just an example of the information capable of identifying a communication path for the flow, and there is a case where address information on the destination communication terminal may be unnecessary depending on the mode of a path to the destination.

It may be predefined, according to the identification grading of the flow, what is used as the classification information. For example, when the flow is identified by a combination of various kinds of information, such as source and destination MAC addresses and IP addresses, the source port number, and the destination port number, the packet forwarding rule generating means 34 can define these pieces of information identified from the packet as classification information. Further, when the flow is identified by rough grading such as only the destination port number or only the source port number, the packet forwarding rule generating means 34 can define the information identified from the packet as classification information. Further, among ports of the packet forwarding apparatus, the port number of a port at which the packet was received may be used as classification information. The information capable of creating classification information can be any information as long as information as classification information is included by the packet forwarding rule generating means 34.

The information used for analyzing application software used on the communication terminals to exchange the packet belonging to the new flow is, for example, the header of the packet.

The header of the packet includes the information capable of identifying a communication path for the flow. Therefore, if the information defined as the information capable of creating classification information is also included in the header, the flow identification means 43 can transmit, to the path control apparatus 10, a new flow detection notification including the header of the packet of the new flow, the identifier of the own node, and the port number of the own node at which the packet was received. If the header of the packet and information other than the port number of the own node at which the the packet was received are included in information defined as the information capable of creating classification information, the flow identification means 43 can include the information in the new flow detection notification.

When the flow identification means 43 has succeed in searching for the packet forwarding rule, the action implementation means 44 performs, on the received packet, processing indicated by action information included in the packet forwarding rule.

When the own node (packet forwarding apparatus) establishes a connection to the path control apparatus 10, the initialization processing means 45 transmits information on the own node to the path control apparatus 10 in response to a request from the packet forwarding apparatus managing means 37 (see FIG. 2) of the path control apparatus 10. At this time, information to be transmitted includes, for example, an identifier of the own node, a port identifier of each port of the own node, the type of link to be connected to each individual port, and information related to the link.

The topology decision information providing means 46 transmits a packet for creating topology information for each link type (hereinafter referred to as a topology decision packet). The topology decision information providing means 46 transmits the topology decision packet for each link type. Then, when transmitting a topology decision packet corresponding to a certain type of link, the topology decision information providing means 46 transmits the packet from a port of the own node to which the type of link is connected.

The topology decision packet transmitted from a certain packet forwarding apparatus is received by another packet forwarding apparatus. The packet forwarding apparatus that received the topology decision packet adds information to the topology decision packet and transmits it to the path control apparatus 10. Thus, the topology information registration means 32 of the path control apparatus 10 receives the topology decision packet for each link type, and based on the topology decision packet, creates topology information for each link type.

In addition to the processing for transmitting the topology decision packet from the own node, when receiving a topology decision packet from any other packet forwarding apparatus, the topology decision information providing means 46 also performs processing for adding information to the topology decision packet and transmitting it to the path control apparatus 10.

The rule management means 42, the flow identification means 43, the action implementation means 44, the initialization processing means 45, and the topology decision information providing means 46 are, for example, implemented by a CPU of a computer operating according to a program for a packet forwarding apparatus. In this case, a program storage device (not shown) of the computer stores the program for the packet forwarding apparatus, and the CPU reads the program so that the CPU will operate, according to the program, as the rule management means 42, the flow identification means 43, the action implementation means 44, the initialization processing means 45, and the topology decision information providing means 46. These means may also be implemented in different hardware.

Next, operation will be described.

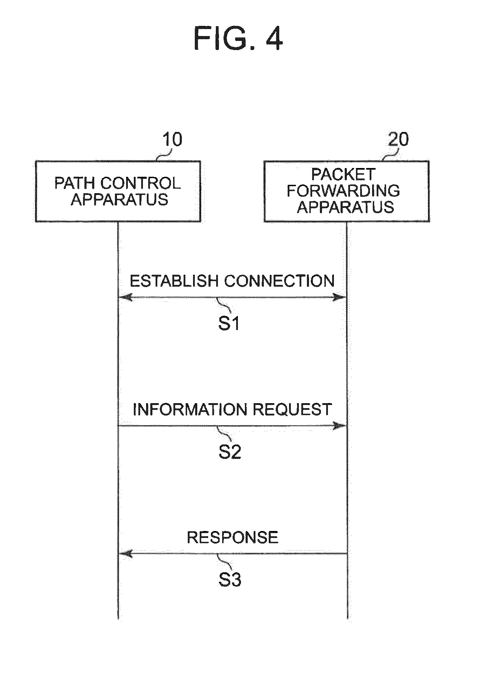

FIG. 4 is an explanatory drawing showing an example of the course of processing upon initialization. In FIG. 4, the packet forwarding apparatus 20 is taken as an example, but the other packet forwarding apparatuses 21 to 25 perform the same processing together with the path control apparatus 10.

When the packet forwarding apparatus 20 is attached to the communication network 1 and connected to the path control apparatus 10, the initialization processing means 45 (see FIG. 3) of the packet forwarding apparatus 20 and the packet forwarding apparatus managing means 37 (see FIG. 2) of the path control apparatus 10 establish a connection between the packet forwarding apparatus 20 and the path control apparatus 10 (step S1). The connection established in step S1 is, for example, a TCP connection using a port number for a control channel.

After the connection is established, the packet forwarding apparatus managing means 37 of the path control apparatus 10 transmits an information request to the packet forwarding apparatus 20 (step S2). The information request is information indicative of a request made to the packet forwarding apparatus to transmit information to the path control apparatus 10.

When receiving the information request transmitted in step S2, the initialization processing means 45 of the packet forwarding apparatus 20 transmits, as a response to the information request, information on the packet forwarding apparatus 20 to the path control apparatus 10 (step S3). Then, when receiving this information, the packet forwarding apparatus managing means 37 of the path control apparatus 10 stores it in the packet forwarding apparatus information storing means 38.

The information transmitted in step S3 from the initialization processing means 45 of the packet forwarding apparatus 20 to the path control apparatus 10 will be specifically described.

As first information transmitted in step S3, there is an identifier of the packet forwarding apparatus itself (the packet forwarding apparatus 20 in this example). The initialization processing means 45 may, for example, transmit an IP address as the identifier of the packet forwarding apparatus itself. The IP address is just an example of the identifier of the packet forwarding apparatus, and information other than the IP address may be transmitted as the identifier.

As second information transmitted in step S3, there is information on each port of the packet forwarding apparatus itself (the packet forwarding apparatus 20 in this example). The information on each port is, for example, information on a port identifier of each port, the type of link (which may be referred to as link type information below) to each individual port, or a link to each individual port. The initialization processing means 45 transmits these pieces of information on each port of the packet forwarding apparatus itself to the path control apparatus 10 together with the above first information (the identifier of the packet forwarding apparatus).

As the above port identifier, for example, a port number can be used. The link type information is, for example, information indicative of a link type different in frame type such as Ethernet, Fibre Channel, or Infiniband. The content of information related to a link varies in link type. For example, when the type of link is Ethernet, the information related to a link may be a MAC address, a communication speed to be supported, or a communication method (e.g., full duplex or half duplex). The information related to a link can also be called link attribute information.

In step S3, the initialization processing means 45 may transmit any other information together in addition to the above pieces of information. For example, information on the capability of the packet forwarding apparatus itself (the packet forwarding apparatus 20 in the example) may be transmitted. As the information on the capability of the packet forwarding apparatus, for example, there is information as to whether to acquire statistical information, information on an action, or the like, supported by the packet forwarding apparatus. Examples of the actions supported by the packet forwarding apparatus include source/destination MAC address conversion, source/destination IP address conversion, and source/destination port number conversion. The path control apparatus 10 collects information on the actions supported by the packet forwarding apparatuses to identify a packet forwarding apparatus supporting the destination MAC address conversion processing to enable control such as to cause the packet forwarding apparatus to perform the destination MAC address conversion or the like, for example, when destination MAC address conversion processing needs to be performed on a specific flow.

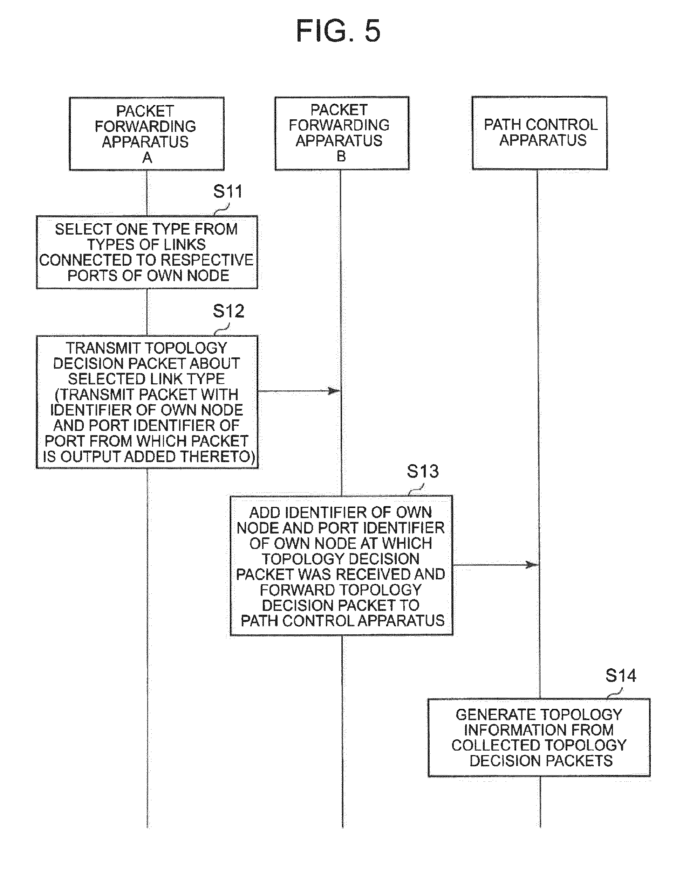

Next, the operation of the path control apparatus 10 to generate topology information will be described. FIG. 5 is an explanatory drawing showing an example of the course of processing upon generation of topology information. In the following description, a packet forwarding apparatus as the source of a topology decision packet is denoted as "A" and a packet forwarding apparatus for forwarding the topology decision packet to the path control apparatus 10 is denoted as "B."

The topology decision information providing means 46 (see FIG. 3) of the packet forwarding apparatus A selects one type from the types of links connected to respective ports of its own node (the packet forwarding apparatus A itself) (step S11). For example, among multiple ports provided in the packet forwarding apparatus A, when some ports are connected to the Ethernet link and the remaining ports are connected to the Fibre Channel link, either one of the types "Ethernet" and "Fibre Channel" is selected. Here, description will be made by taking, as an example, a case where "Ethernet" is selected.

The topology decision information providing means 46 of the packet forwarding apparatus A generates, as the topology decision packet according to the link type selected in step S11, a packet with the following identifiers added thereto: the identifier (e.g., address) of the own node (the packet forwarding apparatus A itself) and the identifier of a port from which the topology decision packet is output. Here, the port from which the topology decision packet is output is a port connected to the link of the type selected in step S 11. The topology decision information providing means 46 of the packet forwarding apparatus A outputs (i.e., transmits), from the port, the topology decision packet with the identifier of the own node and the identifier of the port added thereto (step S12).

When there are two or more ports connected to the link of the type selected in step S11, the topology decision information providing means 46 of the packet forwarding apparatus A generates the topology decision packet for each port to transmit the topology decision packet. As for the ports connected to the link of the type different from that selected in step S11, no topology decision packet is generated and transmitted.

For example, suppose that the packet forwarding apparatus A has four ports, where ports with port numbers (port identifiers) "1" and "2" are connected to the Ethernet link and ports with port number "3" and "4" are connected to the Fibre Channel port. In this case, when "Ethernet" is selected in step S 11, the topology decision information providing means 46 transmits, from a port with port number "1," a topology decision packet with the identifier of the packet forwarding apparatus A and port number "1" added thereto. Similarly, the topology decision information providing means 46 transmits, from a port with port number "2," a topology decision packet with the identifier of the packet forwarding apparatus A and port number "2" added thereto. Since the port numbers "3" and "4" do not correspond to "Ethernet," no topology decision packet is generated and transmitted.

When receiving a topology decision packet transmitted in step S12, the topology decision information providing means 46 of the packet forwarding apparatus B adds, to the topology decision packet, the identifier (e.g., address) of the own node (the packet forwarding apparatus B) and a port identifier of the port of the own node at which the topology decision packet was received, and transmits the topology decision packet to the path control apparatus 10 (step S13).

As a result, the topology information registration means 32 of the path control apparatus 10 receives the topology decision packet indicating, depending on the selected type of link, which port of which packet forwarding apparatus is connected to which port of which packet forwarding apparatus.

For example, suppose that the identifier of the packet forwarding apparatus A and port number "1" are added to the topology decision packet received by the topology decision information providing means 46 of the packet forwarding apparatus B. Suppose then that the packet forwarding apparatus B received the topology decision packet at a port with port number "3" of the packet forwarding apparatus B itself. In this case, the topology decision information providing means 46 of the packet forwarding apparatus B adds, to the topology decision packet, the identifier of the packet forwarding apparatus B itself and port number "3," and transmits the topology decision packet to the path control apparatus 10.

As a result, the path control apparatus 10 receives the topology decision packet indicating that the port with port number "1" of the packet forwarding apparatus A is connected to the port with port number "3" of the packet forwarding apparatus B by the Ethernet link.

FIG. 5 shows only one device, i.e., the packet forwarding apparatus B for forwarding the topology decision packet, but other packet forwarding apparatuses that received the topology decision packet transmitted in step S 12 all perform processing in step S 13. For example, a packet forwarding apparatus that received a topology decision packet with the identifier of the packet forwarding apparatus A and port number "2" added thereto also executes step S13.

Further, FIG. 5 shows only one device, i.e., the packet forwarding apparatus A as the source of the topology decision packet, but each packet forwarding apparatus in the communication network 1 performs processing in steps S11 and S12.

Thus, the topology information registration means 32 of the path control apparatus 10 receives, for each Ethernet link, a topology decision packet about the link. Then, each individual topology decision packet indicates which port of which packet forwarding apparatus is connected to which port of which packet forwarding apparatus by an Ethernet link. Based on each topology decision packet received, the topology information registration means 32 generates topology information on the packet forwarding apparatus connected by the Ethernet link, and stores the topology information in the topology information storage means 31.

After that, each packet forwarding apparatus in the communication network 1 selects an unselected type (Fibre Channel in this example) in step S11, and performs the same subsequent processing. As a result, topology information on packet forwarding apparatuses connected by the Fibre Channel link is also generated by the topology information registration means 32, and stored in the topology information storage means 31.

The communication system performs the processing described with reference to FIG. 5 for each type of link, and stores topology information on each type of link in the topology information storage means 31.

Note that the above-mentioned topology information generation processing is just an illustrative example, and the communication system can also generate topology information on each type of link by any other method.

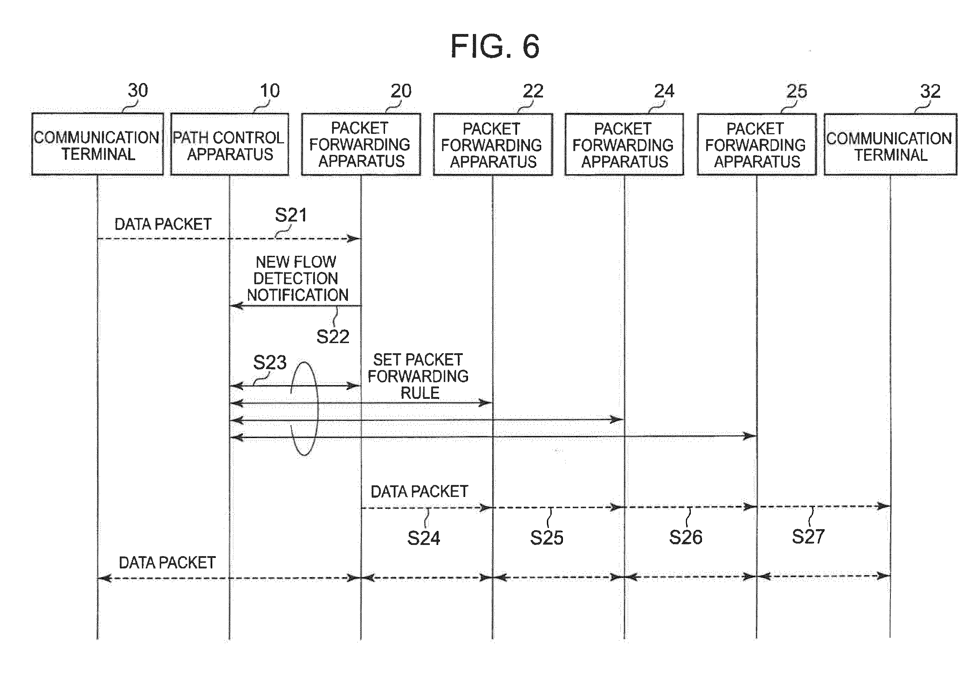

Next, operation upon forwarding a packet will be described. FIG. 6 is an explanatory drawing showing an example of the course of processing performed in the communication system when a packet exchanged between communication terminals is forwarded. Here, description will be made by taking, as an example, a case where the communication terminal 30 shown in FIG. 1 transmits a packet to the communication terminal 32.

The communication terminal 30 transmits the packet to the communication terminal 32 (step S21). This packet is delivered to the packet forwarding apparatus 20 connected to the communication terminal 30.

When the packet forwarding apparatus 20 receives the packet, the flow identification means 43 (see FIG. 3) of the packet forwarding apparatus 20 determines whether a packet forwarding rule adapted to the received packet is stored in the rule table storage means 41. When the packet forwarding apparatus 20 received the packet transmitted from the communication terminal 30 to the communication terminal 32 for the first time, no packet forwarding rule adapted to the packet is stored in the rule table storage means 41 of the packet forwarding apparatus 20. Therefore, the flow identification means 43 of the packet forwarding apparatus 20 buffers the received packet, generates a new flow detection notification including the identifier (e.g., IP address) of its own node (the packet forwarding apparatus 20), the port identifier (e.g., port number) of a port of the own node at which the packet was received, and a header of the packet, and transmits the new flow detection notification to the path control apparatus 10 (step S22).

Here, in the header of the packet, information capable of identifying a communication path for the flow, information capable of creating classification information (for example, MAC addresses, IP addresses, port numbers, or the like, of both the source and the destination), and information used for analyzing application software used on the communication terminals to exchange the packet belonging to the new flow are included. Among pieces of information defined as the information capable of creating classification information, if there is any information other than the header of the packet and the port number of the own node at which the packet was received, the flow identification means 43 can include the information in the new flow detection notification.

Further, in the case of information containing the "information capable of identifying a communication path for the flow," the "information capable of creating classification information," and the "information used for analyzing application software used on the communication terminals to exchange the packet belonging to the new flow," part of the header of the packet, rather than the entire header of the packet, may be included in the new flow detection notification.

Further, in step S22, the flow identification means 43 of the packet forwarding apparatus 20 may generate a new flow detection notification including the received packet itself, the identifier of the own node, and the port identifier of a port of the own node at which the packet was received, and transmit the new flow detection notification to the path control apparatus 10.

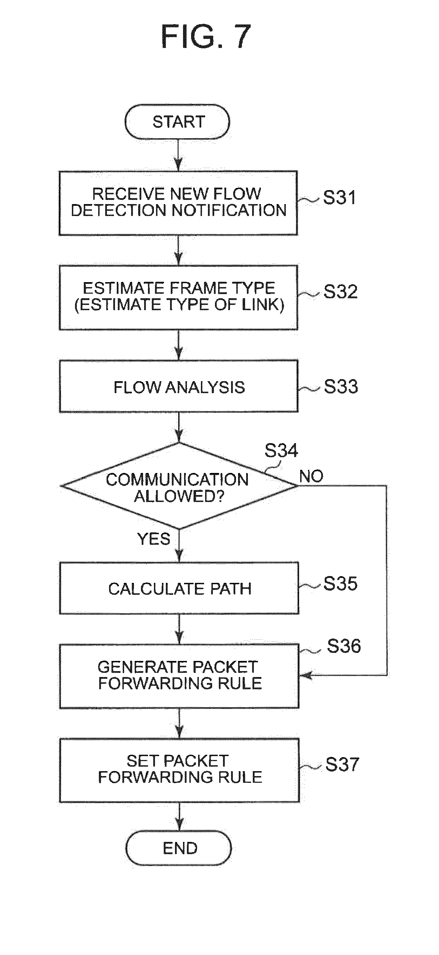

When receiving the new flow detection notification, the path control apparatus 10 generates a packet forwarding rule for the new flow, and sets it in the packet forwarding apparatus (step S23). FIG. 7 is a flowchart showing an example of the course of processing performed by the path control apparatus 10 that received a new flow detection notification.

When receiving a new flow detection notification (step S31), the packet forwarding apparatus managing means 37 of the path control apparatus 10 determines the frame type of new packet flow (here, the packet received by the packet forwarding apparatus 20 from the communication terminal 30) (step S32). In other words, the packet forwarding apparatus managing means 37 determines the type of link to be a forwarding path for the new packet flow. In step S32, the packet forwarding apparatus managing means 37 just has to refer to the identifier of the packet forwarding apparatus as the source of the new flow detection notification and the port identifier of the port at which the packet forwarding apparatus received the packet, both of which are included in the new flow detection notification, to determine the type of link connected to the port based on the information stored in the packet forwarding apparatus information storing means 38.

In this example, the identifier of the packet forwarding apparatus 20 is included in the new flow detection notification. Then, suppose that port number "1" is included in the new flow detection notification as the port identifier of the port at which the packet forwarding apparatus 20 received the packet. As a result of initialization, the type of link connected to each port in each packet forwarding apparatus is stored in the packet forwarding apparatus information storing means 38. Therefore, the packet forwarding apparatus managing means 37 can read, from the packet forwarding apparatus information storing means 38, link type information on the port of the packet forwarding apparatus identified from the new flow detection notification to determine the type of link (frame type of packet). In the above example, the type of link with port number "1" in the packet forwarding apparatus 20 can be read from the packet forwarding apparatus information storing means 38.

In this example, the packet forwarding apparatus managing means 37 determines in step S32 that the type of link is Ethernet.

Next, based on the type determined in step S32, the packet forwarding apparatus managing means 37 analyzes the kind of application software used on the communication terminals (the communication terminals 30 and 32 in this example) to exchange the new packet flow (step S32). In this example, the packet forwarding apparatus managing means 37 refers to information stored in the analytical information storage means 39 to perform this analysis.

The analytical information storage means 39 stores, for each type of link, information indicative of correspondences between contents extracted from fields of the packet and the kind of application software. Here, as for "Ethernet," it is assumed that values of IP addresses, port numbers, or the like in the Ethernet header and each higher-level header are associated with the kind of application software.

Based on the type determined in step S31, the packet forwarding apparatus managing means 37 refers to the headers in order from a low-level header to a high-level header to identify the kind of application software used on the communication terminals.

For example, based on the fact that type determined in step S31 is "Ethernet," the packet forwarding apparatus managing means 37 refers to the type number of the Ethernet header among the packet headers, and when determining that the higher-level header is an IPv4 header, the packet forwarding apparatus managing means 37 refers to the content of the IP header following the Ethernet header. The packet forwarding apparatus managing means 37 refers up to the transport layer header in a similar manner, and checks the contents of referred information against the information stored in the analytical information storage means 39 to identify the kind of application software used on the communication terminals to exchange the packet.

Next, the path calculation means 35 determines whether to allow the communication of the newly generated flow (step S34). In step S34, the path calculation means 35 can determine whether to allow the communication according to a predetermined rule for deciding on the operation of each packet forwarding apparatus. The rule for deciding on the operation of each packet forwarding apparatus is a rule defining the operation of the packet forwarding apparatus. For example, it is assumed that such a rule that "each communication terminal is communicable with any terminal other than the path control apparatus 10 regardless of the type of communication terminal without performing any fine flow control" is defined as the rule for deciding on the operation of the packet forwarding apparatus. Further, for example, it is assumed that the destination MAC address is used as the classification information. When this rule is defined, if the destination MAC address included in the new flow detection notification is the MAC address of any terminal other than the path control apparatus 10, the path calculation means 35 will determine that the communication is allowed (Yes in step S34). If the destination MAC address included in the new flow detection notification is the MAC address of the path control apparatus 10, the path calculation means 35 will determine that the communication is not allowed (No in step S34).

Note that the content of the rule for deciding on the operation of the packet forwarding apparatus is not limited to that mentioned above.

When determining that the communication is allowed (Yes in step S34), the path calculation means 35 refers to the topology information on the type of link determined in step S32 to calculate a path based on a criterion according to the kind of application software determined in step S33 (step S35).

In step S35, based on the address information on a communication terminal as the destination included in the new flow detection notification, the communication terminal position managing means 33 determines to which port of which packet forwarding apparatus the communication terminal is connected. In this example, the packet forwarding apparatus 25 connected to the communication terminal 32 as the destination is identified, and a port connected to the communication terminal 32 among the ports of the packet forwarding apparatus 25 is further identified.

Then, the path calculation means 35 reads, from the topology information storage means 31, topology information (here, topology information on the Ethernet) on the type of link determined in step S32, and calculates a communication path from the source communication terminal to the destination communication terminal based on the topology information and the results of localization by the communication terminal position managing means 33.

At this time, the path calculation means 35 calculates a path based on the criterion according to the kind of application software determined in step S33. The path calculation means 35 can determine whether each link meets the criterion according to the kind of application software based, for example, on the information on each link stored upon initialization to define a communication path from the source communication terminal to the destination communication terminal using the link that meets the criterion.

For example, if the kind of application software is VoIP (Voice over IP), the path calculation means 35 can identify a link that meets a low-latency criterion from the topology information on the Ethernet to define a communication path from the source communication terminal to the destination communication terminal using the link.

Further, for example, if the application software involves downloading of a bulk file, the path calculation means 35 can identify a link that meets a broadband criterion from the topology information on the Ethernet to define a communication path from the source communication terminal to the destination communication terminal using the link.

In this example, it is assumed that a communication path going through the packet forwarding apparatus 20, the packet forwarding apparatus 22, the packet forwarding apparatus 24, the packet forwarding apparatus 25, and the communication terminal 32 in this order is defined.

After the communication path is calculated, the packet forwarding rule generating means 34 generates a packet forwarding rule for each packet forwarding apparatus on the path defined in step S35 (step S36). At this time, the packet forwarding rule generating means 34 first decides on classification information using the "information capable of creating classification information" included in the new flow detection notification. The packet forwarding rule generating means 34 can decide some or all of items included in the "information capable of creating classification information" to be the classification information. What kinds of items are set as the classification information are predefined, for example, by a network administrator. The classification information is common among respective packet forwarding apparatuses on the path.

Then, the packet forwarding rule generating means 34 defines, for each packet forwarding apparatus on the communication path, forwarding to the following node on the communication path as action information.

The packet forwarding rule generating means 34 combines the classification information common among the respective packet forwarding apparatuses on the communication path with the action information defined for each packet forwarding apparatus on the communication path to decide on a packet forwarding rule to be set in each packet forwarding apparatus. The packet forwarding rule generating means 34 includes the timer value in the action information. For example, a predetermined value can be used as the timer value.

After step S36, the packet forwarding apparatus managing means 37 transmits, to each packet forwarding apparatus on the communication path, a packet forwarding rule corresponding to the packet forwarding apparatus together with a rule setting instruction (step S37). For example, the packet forwarding rule created for the packet forwarding apparatus 20 is transmitted to the packet forwarding apparatus 20 together with the rule setting instruction. The same holds true for the other packet forwarding rules.

In step S37, when receiving the packet forwarding rule and the setting instruction from the path control apparatus 10, the rule management means 42 of each of the packet forwarding apparatuses 20, 22, 24, and 25 sets the packet forwarding rule in accordance with the instruction. Specifically, the received packet forwarding rule is stored in the rule table storage means 41.

On the other hand, when it is determined in step S34 that the communication is not allowed (No in step S34), the packet forwarding rule generating means 34 generates, for example, a packet forwarding rule for the packet forwarding apparatus 20 as the source of the new flow detection notification (step S36). As already described, the packet forwarding rule generating means 34 can decide some or all of the items included in the "information capable of creating classification information" to be the classification information. Further, in this case, the packet forwarding rule generating means 34 can generate action information indicative of discarding the packet. The packet forwarding rule generating means 34 generates a packet forwarding rule including the classification information and the action information. A predetermined value, for example, can be used as the timer value to be included in the action information.

The operation of setting this packet forwarding rule in the packet forwarding apparatus 20 (step S37) is the same as that as already described. Here, the description is made by taking, as an example, the case where the packet forwarding rule is set in the packet forwarding apparatus 20 as the source of the new flow detection notification when the communication is not allowed, but the path control apparatus 10 can set the same packet forwarding rule in the other packet forwarding apparatuses.

After completion of setting the packet forwarding rule in each of the packet forwarding apparatus 20, 22, 24, and 25 on the communication path in the processing step S23 shown in FIG. 6 (steps S31 to S37 shown in FIG. 7), the action implementation means 44 of the packet forwarding apparatus 20 forwards the buffered packet according to the set packet forwarding rule (see step S24 in FIG. 6). In other words, the packet is forwarded to the packet forwarding apparatus 22 as the following node as defined in the action information of the set packet forwarding rule.

Packet forwarding rules adapted to this packet are also set in the packet forwarding apparatuses 22, 24, and 25 on the communication path defined by the path control apparatus 10. Therefore, upon receiving the packet at each of the packet forwarding apparatuses 22, 24, and 25, the flow identification means 43 searches for a packet forwarding rule adapted to the packet, and the action implementation means 44 forwards the packet to the following node according to the packet forwarding rule (step S25, S26, and S27). As a result, the packet is delivered to the destination communication terminal 32.

Since the setting of the packet forwarding rule for the communication from the communication terminal 30 to the communication terminal 32 is completed, when the communication terminal 3 0 transmits a packet to the communication terminal 32 after this time, the packet can be forwarded according to the packet forwarding rule set in each packet forwarding apparatus without the need for the packet forwarding apparatuses 20, 22, 24, and 25 to make inquiries to the path control apparatus 10.

When the communication terminal 32 transmits a packet to the communication terminal 30, the same processing as mentioned above can also be performed in the communication system of the present invention.

Even when any terminal other than the communication terminals 30 and 32 transmits a packet, the same processing as mentioned above can be performed in the communication system of the present invention.

According to the present invention, the path control apparatus 10 stores topology information for each type of link. Further, when receiving a new flow detection notification, the path control apparatus 10 identifies the type of link through which a new packet flow passes, and analyzes the kind of application software used on communication terminals to exchange the packet. Then, the path control apparatus 10 uses the topology information corresponding to the identified type of link to calculate a communication path based on a criterion according to the kind of application software and sets a packet forwarding rule in a packet forwarding apparatus on the path. Thus, according to the present invention, even when there are two or more types of links of packet forwarding apparatuses that form a communication network, an appropriate flow path can be defined.

In the aforementioned exemplary embodiment, the case where topologies completely different in link type between Fibre Channel and Ethernet are formed is described. However, like Fibre Channel over Ethernet (FCoE), there is a case where a frame of a specific link type can be encapsulated and forwarded in a frame of another link type. In this case, the initialization processing means 45 of each packet forwarding apparatus may notify the path control apparatus 10 that it has this function (function of frame encapsulation). Then, when calculating a path as a result of detection of a new flow, the path control apparatus 10 may calculate a path for a frame storing another type of frame in a payload.

In this path calculation, for example, the communication terminal position managing means 33 identifies the positions of the source communication terminal and the destination communication terminal. Then, the path calculation means 35 determines that the two communication terminals are connected to different communication networks isolated by another link system. Further, the path calculation means 35 determines, as a result of initialization, that there are packet forwarding apparatuses for making two different points communicable by frame encapsulation. Then, the path calculation means 35 calculates the following three paths.

The first path is a path from the source communication terminal of the packet to a packet forwarding apparatus (denoted as P) belonging to the same communication network as the communication terminal and having the packet encapsulation function.

The second path is a path from the packet forwarding apparatus P to a packet forwarding apparatus (denoted as Q) belonging to the same communication network as a destination terminal and having the packet encapsulation function.

The third path is a path from the packet forwarding apparatus Q to the destination communication terminal.

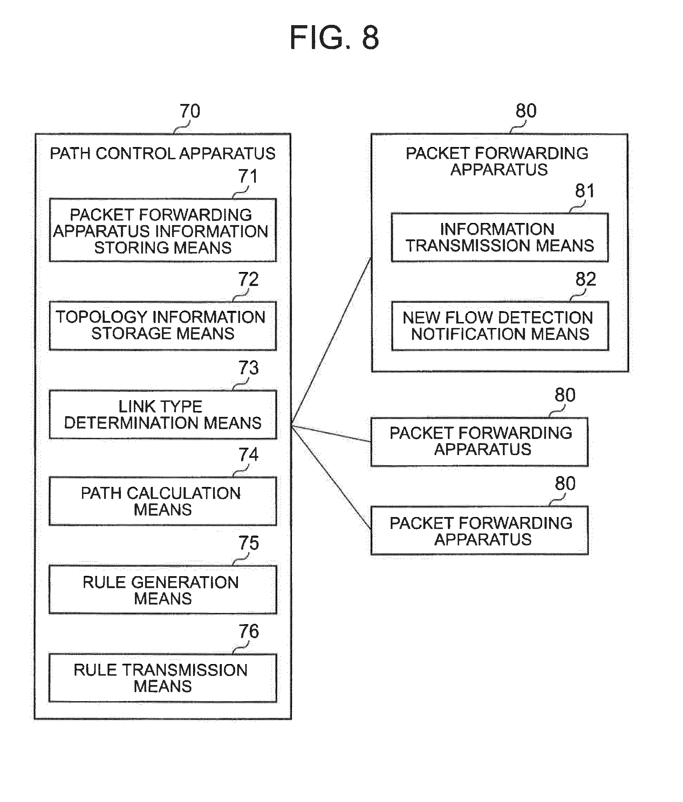

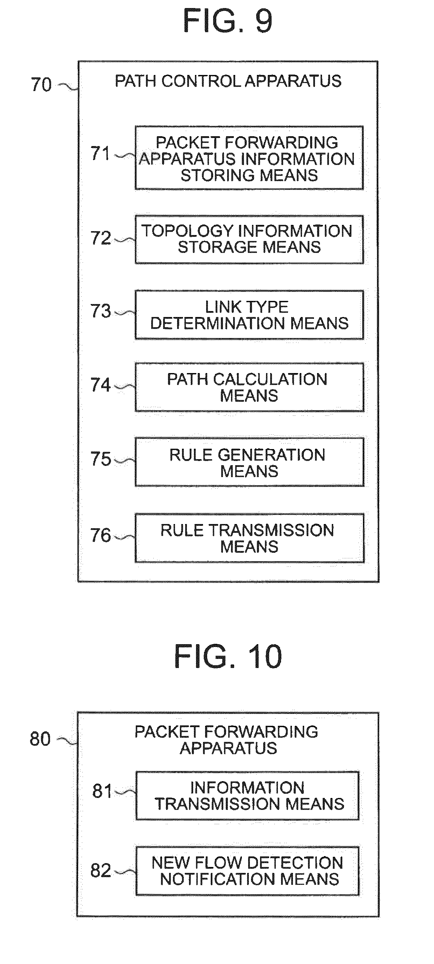

Next, the minimal configuration of the present invention will be described. FIG. 8 is a block diagram showing an example of the minimal configuration of a communication system of the present invention. FIG. 9 is a block diagram showing an example of the minimal configuration of a path control apparatus of the present invention. FIG. 10 is a block diagram showing an example of the minimal configuration of a packet forwarding apparatus of the present invention.

The communication system of the present invention includes multiple packet forwarding apparatuses 80 for forwarding a received packet, and a path control apparatus 70 for setting a packet forwarding rule in each packet forwarding apparatus 80 to control a communication path for the packet (see FIG. 8).

The packet forwarding apparatus 80 includes information transmission means 81 and new flow detection notification means 82 (see FIG. 8 and FIG. 10).

The information transmission means 81 (e.g., the initialization processing means 45) transmits, to the path control apparatus 70, at least an identifier of its own node, a port identifier of each port of the own node, and a type of link connected to each port of the own node.

When no packet forwarding rule adapted to the received packet is registered, the new flow detection notification means 82 (e.g., the flow identification means 43) transmits, to the path control apparatus, a new flow detection notification including information on the packet, the identifier of the own node, and the port identifier of a port at which the packet was received.

The path control apparatus 70 includes packet forwarding apparatus information storing means 71, topology information storage means 72, link type determination means 73, path calculation means 74, rule generation means 75, and rule transmission means 76 (see FIG. 8 and FIG. 9).

The packet forwarding apparatus information storing means 71 (e.g., packet forwarding apparatus information storing means 38) stores information received from the information transmission means 81 of each packet forwarding apparatus 80. In other words, the packet forwarding apparatus information storing means 71 stores, for each packet forwarding apparatus, at least the identifier of the packet forwarding apparatus, the port identifier of each port of the packet forwarding apparatus, and the type of link connected to each port of the packet forwarding apparatus.

The topology information storage means 72 (e.g., topology information storage means 31) stores topology information on the packet forwarding apparatus 80 for each type of link connected to each port of the packet forwarding apparatus 80.

When receiving the new flow detection notification from the packet forwarding apparatus 80, the link type determination means 73 (e.g., the packet forwarding apparatus managing means 37 executing step S32) determines type of link through which the packet received by the packet forwarding apparatus passes based on the identifier of the packet forwarding apparatus and the port identifier included in the new flow detection notification and the information stored in the packet forwarding apparatus information storing means 71.

The path calculation means 74 (e.g., path calculation means 35) calculates a communication path for the packet based on topology information on the type of link determined by the link type determination means 73.

The rule generation means 75 (e.g., packet forwarding rule generating means 34) generates a packet forwarding rule for each packet forwarding apparatus on the communication path.

The rule transmission means 76 (e.g., the packet forwarding apparatus managing means 37 executing step S37) transmits the generated packet forwarding rule to each packet forwarding apparatus on the communication path.

According to the above-mentioned configuration, even when there are two or more types of link of the packet forwarding apparatuses that form a communication network, an appropriate flow path can be defined.

The path control apparatus 70 of the present invention can also have the same effect. Further, the packet forwarding apparatus 80 of the present invention can have the same effect in combination with the path control apparatus 70.

Part of or the entire aforementioned exemplary embodiment can also be described as, but not limited to, the following supplementary notes:

(Supplementary Note 1) A communication system characterized by including: multiple packet forwarding apparatuses for forwarding a received packet; and a path control apparatus for setting a packet forwarding rule in each packet forwarding apparatus to control a communication path for the packet, wherein each packet forwarding apparatus includes: information transmission means for transmitting, to the path control apparatus, at least an identifier of its own node, a port identifier of each port of the own node, and a type of link connected to each port of the own node; and new flow detection notification means for transmitting, to the path control apparatus, a new flow detection notification including information on the packet, the identifier of the own node, and the port identifier of a port at which the packet was received when no packet forwarding rule adapted to the received packet is registered, and the path control apparatus includes: packet forwarding apparatus information storing means for storing information received from the information transmission means of each packet forwarding apparatus; topology information storage means for storing topology information on the packet forwarding apparatus for each type of link connected to each port of the packet forwarding apparatus; link type determination means for determining a type of link through which the packet received by the packet forwarding apparatus passes when receiving a new flow detection notification from the packet forwarding apparatus, based on the identifier of the packet forwarding apparatus and the port identifier included in the new flow detection notification, and information stored in the packet forwarding apparatus information storing means; path calculation means for calculating a communication path for the packet based on topology information on the type of link determined by the link type determination means; rule generation means for generating a packet forwarding rule for each packet forwarding apparatus on the communication path; and rule transmission means for transmitting the generated packet forwarding rule to each packet forwarding apparatus on the communication path.

(Supplementary Note 2) The communication system according to Supplementary Note 1, wherein upon establishing a connection to the path control apparatus, the information transmission means of each packet forwarding apparatus transmits, to the path control apparatus, at least the identifier of the own node, the port identifier of each port of the own node, and the type of link connected to each port of the own node.

(Supplementary Note 3) The communication system according to Supplementary Note 1 or Supplementary Note 2, wherein the path control apparatus further includes analysis means for analyzing the characteristics of communication terminals to exchange the packet based on information on the packet included in the new flow detection notification, and
the path calculation means calculates a communication path according to the characteristics of the communication terminals based on topology information on the type of link determined by the link type determination means.

(Supplementary Note 4) The communication system according to any one of Supplementary Note 1 to Supplementary Note 3, wherein the path control apparatus further includes analysis means for analyzing the kind of application software used on communication terminals to exchange the packet based on information on the packet included in the new flow detection notification, and the path calculation means calculates a communication path according to the kind of application software used on the communication terminals based on topology information on the type of link determined by the link type determination means.

(Supplementary Note 5) A path control apparatus for setting a packet forwarding rule in each packet forwarding apparatus to control a communication path for a packet, characterized by including: packet forwarding apparatus information storing means for storing, for each packet forwarding apparatus, at least an identifier of the packet forwarding apparatus, a port identifier of each port of the packet forwarding apparatus, and a type of link connected to each port of the packet forwarding apparatus;
topology information storage means for storing topology information on the packet forwarding apparatus for each type of link connected to each port of the packet forwarding apparatus; link type determination means for determining a type of link through which the packet received by the packet forwarding apparatus passes when receiving, from the packet forwarding apparatus, a new flow detection notification including information on the new packet flow received by the packet forwarding apparatus, the identifier of the packet forwarding apparatus, and the port identifier of a port at which the packet was received, based on the identifier of the packet forwarding apparatus and the port identifier included in the new flow detection notification, and information stored in the packet forwarding apparatus information storing means; path calculation means for calculating a communication path for the packet based on topology information on the type of link determined by the link type determination means; rule generation means for generating a packet forwarding rule for each packet forwarding apparatus on the communication path; and rule transmission means for transmitting the generated packet forwarding rule to each packet forwarding apparatus on the communication path.

(Supplementary Note 6) The path control apparatus according to Supplementary Note 5, further including analysis means for analyzing the characteristics of communication terminals to exchange the packet based on information on the packet included in the new flow detection notification, wherein the path calculation means calculates a communication path according to the characteristics of the communication terminals based on topology information on the type of link determined by the link type determination means.

(Supplementary Note 7) A packet forwarding apparatus for forwarding a received packet according to a packet forwarding rule generated by a path control apparatus, characterized by including: information transmission means for transmitting, to the path control apparatus, at least an identifier of its own node, a port identifier of each port of the own node, and a type of link connected to each port of the own node; and new flow detection notification means for transmitting, to the path control apparatus, a new flow detection notification including information on the packet, the identifier of the own node, and the port identifier of a port at which the packet was received when no packet forwarding rule adapted to the received packet is registered.

(Supplementary Note 8) The packet forwarding apparatus according to Supplementary Note 7, wherein upon establishing a connection to the path control apparatus, the information transmission means transmits, to the path control apparatus, at least the identifier of the own node, the port identifier of each port of the own node, and the type of link connected to each port of the own node.

(Supplementary Note 9) A path control method characterized by including: causing each of multiple packet forwarding apparatuses for forwarding a received packet to transmit, to a path control apparatus, at least an identifier of its own node, a port identifier of each port of the own node, and a type of link connected to each port of the own node; causing the path control apparatus for controlling each packet forwarding apparatus to store, for each packet forwarding apparatus, at least the identifier of the packet forwarding apparatus, the port identifier of each port of the packet forwarding apparatus, and the type of link connected to each port of the packet forwarding apparatus in packet forwarding apparatus information storing means; causing the packet forwarding apparatus to transmit, to the path control apparatus, a new flow detection notification including information on the packet, the identifier of the own node, and the port identifier of a port at which the packet was received when no packet forwarding rule adapted to the received packet is registered; and causing the path control apparatus to determine a type of link through which the packet received by the packet forwarding apparatus passes when receiving the new flow detection notification, based on the identifier of the packet forwarding apparatus and the port identifier included in the new flow detection notification, and information stored in the packet forwarding apparatus information storing means, calculate a communication path for the packet based on topology information on the type of link determined, generate a packet forwarding rule for each packet forwarding apparatus on the communication path, and transmit the generated packet forwarding rule to each packet forwarding apparatus on the communication path.

(Supplementary Note 10) A path control program installed on a computer for setting a packet forwarding rule in each packet forwarding apparatus to control a communication path for a packet, the path control program causing the computer to perform: information registration processing for storing, for each packet forwarding apparatus, at least an identifier of the packet forwarding apparatus, a port identifier of each port of the packet forwarding apparatus, and a type of link connected to each port of the packet forwarding apparatus in packet forwarding apparatus information storing means; link type determination processing for determining a type of link through which the packet received by the packet forwarding apparatus passes when receiving, from the packet forwarding apparatus, a new flow detection notification including information on the new packet flow received by the packet forwarding apparatus, the identifier of the packet forwarding apparatus, and the port identifier of a port at which the packet was received, based on the identifier of the packet forwarding apparatus and the port identifier included in the new flow detection notification, and information stored in the packet forwarding apparatus information storing means; path calculation processing for calculating a communication path for the packet based on topology information on the type of link determined in the link type determination processing; rule generation processing for generating a packet forwarding rule for each packet forwarding apparatus on the communication path; and rule transmission processing for transmitting the generated packet forwarding rule to each packet forwarding apparatus on the communication path.

(Supplementary Note 11) The path control program according to Supplementary Note 10, causing the computer further perform analysis processing for analyzing the characteristics of communication terminals to exchange the packet based on information on the packet included in the new flow detection notification, wherein in the path calculation processing, a communication path is calculated according to the characteristics of the communication terminals based on topology information on the type of link determined in the link type determination processing.

(Supplementary Note 12) A program for a packet forwarding apparatus, which is installed on a computer for forwarding a received packet according to a packet forwarding rule generated by a path control apparatus, the program causing the computer to perform: information transmission processing for transmitting, to the path control apparatus, at least an identifier of its own node, a port identifier of each port of the own node, and a type of link connected to each port of the own node; and new flow detection notification processing for transmitting, to the path control apparatus, a new flow detection notification including information on the packet, the identifier of the own node, and the port identifier of a port at which the packet was received when no packet forwarding rule adapted to the received packet is registered.

(Supplementary Note 13) The program for a packet forwarding apparatus according to Supplementary Note 12, the program causing the computer to perform the information transmission processing upon establishing a connection to the path control apparatus.

(Supplementary Note 14) A communication system characterized by including: multiple packet forwarding apparatuses for forwarding a received packet; and a path control apparatus for setting a packet forwarding rule in each packet forwarding apparatus to control a communication path for the packet, wherein each packet forwarding apparatus includes: an information transmission unit for transmitting, to the path control apparatus, at least an identifier of its own node, a port identifier of each port of the own node, and a type of link connected to each port of the own node; and a new flow detection notification unit for transmitting, to the path control apparatus, a new flow detection notification including information on the packet, the identifier of the own node, and the port identifier of a port at which the packet was received when no packet forwarding rule adapted to the received packet is registered, and the path control apparatus includes: a packet forwarding apparatus information storing unit for storing information received from the information transmission unit of each packet forwarding apparatus; a topology information storage unit for storing topology information on the packet forwarding apparatus for each type of link connected to each port of the packet forwarding apparatus; a link type determination unit for determining a type of link through which the packet received by the packet forwarding apparatus passes when receiving a new flow detection notification from the packet forwarding apparatus, based on the identifier of the packet forwarding apparatus and the port identifier included in the new flow detection notification, and information stored in the packet forwarding apparatus information storing unit; a path calculation unit for calculating a communication path for the packet based on topology information on the type of link determined by the link type determination unit; a rule generation unit for generating a packet forwarding rule for each packet forwarding apparatus on the communication path; and a rule transmission unit for transmitting the generated packet forwarding rule to each packet forwarding apparatus on the communication path.

(Supplementary Note 15) The communication system according to Supplementary Note 14, wherein upon establishing a connection to the path control apparatus, the information transmission unit of each packet forwarding apparatus transmits, to the path control apparatus, at least the identifier of the own node, the port identifier of each port of the own node, and the type of link connected to each port of the own node.

(Supplementary Note 16) The communication system according to Supplementary Note 14, wherein the path control apparatus further includes an analysis unit for analyzing the characteristics of communication terminals to exchange the packet based on information on the packet included in the new flow detection notification, and the path calculation unit calculates a communication path according to the characteristics of the communication terminals based on topology information on the type of link determined by the link type determination unit.

(Supplementary Note 17) The communication system according to Supplementary Note 14, wherein the path control apparatus further includes an analysis unit for analyzing the kind of application software used on communication terminals to exchange the packet based on information on the packet included in the new flow detection notification, and the path calculation unit calculates a communication path according to the kind of application software used on the communication terminals based on topology information on the type of link determined by the link type determination unit.

(Supplementary Note 18) A path control apparatus for setting a packet forwarding rule in each packet forwarding apparatus to control a communication path for a packet, characterized by including: a packet forwarding apparatus information storing unit for storing, for each packet forwarding apparatus, at least an identifier of the packet forwarding apparatus, a port identifier of each port of the packet forwarding apparatus, and a type of link connected to each port of the packet forwarding apparatus; a topology information storage unit for storing topology information on the packet forwarding apparatus for each type of link connected to each port of the packet forwarding apparatus; a link type determination unit for determining a type of link through which the packet received by the packet forwarding apparatus passes when receiving, from the packet forwarding apparatus, a new flow detection notification including information on the new packet flow received by the packet forwarding apparatus, the identifier of the packet forwarding apparatus, and the port identifier of a port at which the packet was received, based on the identifier of the packet forwarding apparatus and the port identifier included in the new flow detection notification, and information stored in the packet forwarding apparatus information storing unit; a path calculation unit for calculating a communication path for the packet based on topology information on the type of link determined by the link type determination unit; a rule generation unit for generating a packet forwarding rule for each packet forwarding apparatus on the communication path; and a rule transmission unit for transmitting the generated packet forwarding rule to each packet forwarding apparatus on the communication path.

(Supplementary Note 19) The path control apparatus according to Supplementary Note 18, further including an analysis unit for analyzing the characteristics of communication terminals to exchange the packet based on information on the packet included in the new flow detection notification, wherein the path calculation unit calculates a communication path according to the characteristics of the communication terminals based on topology information on the type of link determined by the link type determination unit.

(Supplementary Note 20) A packet forwarding apparatus for forwarding a received packet according to a packet forwarding rule generated by a path control apparatus, characterized by including: an information transmission unit for transmitting, to the path control apparatus, at least an identifier of its own node, a port identifier of each port of the own node, and a type of link connected to each port of the own node; and a new flow detection notification unit for transmitting, to the path control apparatus, a new flow detection notification including information on the packet, the identifier of the own node, and the port identifier of a port at which the packet was received when no packet forwarding rule adapted to the received packet is registered.

(Supplementary Note 21) The packet forwarding apparatus according to Supplementary Note 20, wherein upon establishing a connection to the path control apparatus, the information transmission unit transmits, to the path control apparatus, at least the identifier of the own node, the port identifier of each port of the own node, and the type of link connected to each port of the own node.

(Supplementary Note 22) A path control method characterized by including: causing each of multiple packet forwarding apparatuses for forwarding a received packet to transmit, to a path control apparatus, at least an identifier of its own node, a port identifier of each port of the own node, and a type of link connected to each port of the own node; causing the path control apparatus for controlling each packet forwarding apparatus to store, for each packet forwarding apparatus, at least the identifier of the packet forwarding apparatus, the port identifier of each port of the packet forwarding apparatus, and the type of link connected to each port of the packet forwarding apparatus in a packet forwarding apparatus information storing unit; causing the packet forwarding apparatus to transmit, to the path control apparatus, a new flow detection notification including information on the packet, the identifier of the own node, and the port identifier of a port at which the packet was received when no packet forwarding rule adapted to the received packet is registered; and causing the path control apparatus to determine a type of link through which the packet received by the packet forwarding apparatus passes when receiving the new flow detection notification, based on the identifier of the packet forwarding apparatus and the port identifier included in the new flow detection notification, and information stored in the packet forwarding apparatus information storing unit, calculate a communication path for the packet based on topology information on the type of link determined, generate a packet forwarding rule for each packet forwarding apparatus on the communication path, and transmit the generated packet forwarding rule to each packet forwarding apparatus on the communication path.

(Supplementary Note 23) A path control program installed on a computer for setting a packet forwarding rule in each packet forwarding apparatus to control a communication path for a packet, the path control program causing the computer to perform:
information registration processing for storing, for each packet forwarding apparatus, at least an identifier of the packet forwarding apparatus, a port identifier of each port of the packet forwarding apparatus, and a type of link connected to each port of the packet forwarding apparatus in a packet forwarding apparatus information storing unit; link type determination processing for determining a type of link through which the packet received by the packet forwarding apparatus passes when receiving, from the packet forwarding apparatus, a new flow detection notification including information on the new packet flow received by the packet forwarding apparatus, the identifier of the packet forwarding apparatus, and the port identifier of a port at which the packet was received, based on the identifier of the packet forwarding apparatus and the port identifier included in the new flow detection notification, and information stored in the packet forwarding apparatus information storing unit; path calculation processing for calculating a communication path for the packet based on topology information on the type of link determined in the link type determination processing; rule generation processing for generating a packet forwarding rule for each packet forwarding apparatus on the communication path; and rule transmission processing for transmitting the generated packet forwarding rule to each packet forwarding apparatus on the communication path.

(Supplementary Note 24) The path control program according to Supplementary Note 23, causing the computer to further perform analysis processing for analyzing the characteristics of communication terminals to exchange the packet based on information on the packet included in the new flow detection notification,
wherein in the path calculation processing, a communication path is calculated according to the characteristics of communication terminals based on topology information on the type of link determined in the link type determination processing.

As described above, although the present invention is described with reference to the exemplary embodiment, the present invention is not limited to the aforementioned exemplary embodiment. Various changes that can be understood by those skilled in the art within the scope of the present invention can be made to the configurations and details of the present invention.

This application claims priority based on Japanese Patent Application No. 2010-048884, filed March 5, 2010.

### Industrial Applicability

The present invention can be suitably applied to a communication system including multiple packet forwarding apparatuses for forwarding a packet, and a path control apparatus for controlling each packet forwarding apparatus to control a flow path.

### Reference Signs List

- 10: Path Control Apparatus
- 20 to 25: Packet Forwarding apparatus
- 31: Topology Information Storage Means
- 32: Topology Information Registration Means
- 33: Communication Terminal Position Managing Means
- 34: Packet Forwarding Rule Generating Means
- 35: Path Calculation Means
- 36: Rule Setting Content Storage Means
- 37: Packet Forwarding apparatus Managing Means
- 38: Packet Forwarding apparatus Information Storing Means
- 39: Analytical Information Storage Means
- 41: Rule Table Storage Means
- 42: Rule Management Means
- 43: Flow Identification Means
- 44: Action Implementation Means
- 45: Initialization Processing Means
- 46: Topology Decision Information Providing Means

## Claims

1. A communication system comprising:
a plurality of packet forwarding apparatuses (20,21,22,23,24 and 25) for forwarding a received packet; and
a path control apparatus (10) for setting a packet forwarding rule in each packet forwarding apparatus (20,21,22,23,24 and 25) to control a communication path for the packet,
each packet forwarding apparatus (20,21,22,23,24 and 25) includes:
information transmission means (45) for transmitting, to the path control apparatus (10), at least an identifier of its own node, a port identifier of each port of the own node, and a type of link connected to each port of the own node; and
new flow detection notification means (43) for transmitting, to the path control apparatus (10), a new flow detection notification including information on the packet, the identifier of the own node, and the port identifier of a port at which the packet was received when no packet forwarding rule adapted to the received packet is registered, and
the path control apparatus (10) includes:
packet forwarding apparatus information storing means (38) for storing information received from the information transmission means (45) of each packet forwarding apparatus (20,21,22,23,24 and 25);
topology information storage means (31) for storing topology information on the packet forwarding apparatus (20,21,22,23,24 and 25) for each type of link connected to each port of the packet forwarding apparatus (20,21,22,23,24 and 25);
link type determination means (37) for determining a type of link through which the packet received by the packet forwarding apparatus (20,21,22,23,24 and 25) passes when receiving a new flow detection notification from the packet forwarding apparatus (20,21,22,23,24 and 25), based on the identifier of the packet forwarding apparatus (20,21,22,23,24 and 25) and the port identifier included in the new flow detection notification, and information stored in the packet forwarding apparatus information storing means(38);
path calculation means (35) for calculating a communication path for the packet based on topology information on the type of link determined by the link type determination means (37);
rule generation means (34) for generating a packet forwarding rule for each packet forwarding apparatus (20,21,22,23,24 and 25) on the communication path; and
rule transmission means (37) for transmitting the generated packet forwarding rule to each packet forwarding apparatus (20,21,22,23,24 and 25) on the communication path.

2. The communication system according to claim 1, wherein upon establishing a connection to the path control apparatus (10), the information transmission means (45) of each packet forwarding apparatus (20,21,22,23,24 and 25) transmits, to the path control apparatus (10), at least the identifier of the own node, the port identifier of each port of the own node, and the type of link connected to each port of the own node.

3. The communication system according to claim 1 or 2, wherein
the path control apparatus (10) further includes analysis means (37) for analyzing characteristics of communication terminals to exchange the packet based on information on the packet included in the new flow detection notification, and
the path calculation means (35) calculates a communication path according to the characteristics of the communication terminals based on topology information on the type of link determined by the link type determination means (37).

4. The communication system according to any one of claims 1 to 3, wherein
the path control apparatus (10) further includes analysis means(37) for analyzing a kind of application software used on communication terminals to exchange the packet based on information on the packet included in the new flow detection notification, and
the path calculation means (35) calculates a communication path according to the kind of application software used on the communication terminals based on topology information on the type of link determined by the link type determination means (37).

5. A path control method **characterized by** comprising:
causing each of a plurality of packet forwarding apparatuses (20,21,22,23,24 and 25) for forwarding a received packet to transmit, to a path control apparatus (10), at least identifier of its own node, a port identifier of each port of the own node, and a type of link connected to each port of the own node;
causing the path control apparatus (10) for controlling each packet forwarding apparatus (20,21,22,23,24 and 25) to store, for each packet forwarding apparatus (20,21,22,23,24 and 25), at least the identifier of the packet forwarding apparatus (20,21,22,23,24 and 25), the port identifier of each port of the packet forwarding apparatus (20,21,22,23,24 and 25), and the type of link connected to each port of the packet forwarding apparatus (20,21,22,23,24 and 25) in packet forwarding apparatus information storing means (38);
causing the packet forwarding apparatus (20,21,22,23,24 and 25) to transmit, to the path control apparatus (10), a new flow detection notification including information on the packet, the identifier of the own node, and the port identifier of a port at which the packet was received when no packet forwarding rule adapted to the received packet is registered; and
causing the path control apparatus (10) to
determine a type of link through which the packet received by the packet forwarding apparatus (20,21,22,23,24 and 25) passes when receiving the new flow detection notification, based on the identifier of the packet forwarding apparatus (20,21,22,23,24 and 25) and the port identifier included in the new flow detection notification, and information stored in the packet forwarding apparatus information storing means (38),
calculate a communication path for the packet based on topology information on the type of link determined,
generate a packet forwarding rule for each packet forwarding apparatus (20,21,22,23,24 and 25) on the communication path, and
transmit the generated packet forwarding rule to each packet forwarding apparatus (20,21,22,23,24 and 25) on the communication path.

## Patentansprüche

1. Kommunikationssystem, das Folgendes umfasst:
mehrere Paketweiterleitungsvorrichtungen (20, 21, 22, 23, 24 und 25) zum Weiterleiten eines empfangenen Pakets; und
eine Pfadsteuervorrichtung (10) zum Setzen einer Paketweiterleitungsregel in jeder Paketweiterleitungsvorrichtung (20, 21, 22, 23, 24 und 25) zum Steuern eines Kommunikationspfades für das Paket,
wobei jede Paketweiterleitungsvorrichtung (20, 21, 22, 23, 24 und 25) Folgendes beinhaltet:
Informationsübertragungsmittel (45) zum Übertragen, zu der Pfadsteuervorrichtung (10), wenigstens einer Kennung ihres eigenen Knotens, einer Portkennung jedes Ports des eigenen Knotens und eines Typs der mit jedem Port des eigenen Knotens verbundenen Link; und
Nächster-Fluss-Erkennung-Benachrichtigungsmittel (43) zum Übertragen, zu der Pfadsteuervorrichtung (10), einer Nächster-Fluss-Erkennungsbenachrichtigung mit Informationen über das Paket, der Kennung des eigenen Knotens und der Portkennung eines Ports, an dem das Paket empfangen wurde, wenn keine an das empfangene Paket angepasste Paketweiterleitungsregel registriert ist, und
wobei die Pfadsteuervorrichtung (10) Folgendes beinhaltet:
Paketweiterleitungsvorrichtung-Informationsspeichermittel (38) zum Speichern von von dem Informationsübertragungsmittel (45) jeder Paketweiterleitungsvorrichtung (20, 21, 22, 23, 24 und 25) empfangenen Informationen;
Topologieinformationsspeichermittel (31) zum Speichern von Topologieinformationen auf der Paketweiterleitungsvorrichtung (20, 21, 22, 23, 24 und 25) für jeden mit jedem Port der Paketweiterleitungsvorrichtung (20, 21, 22, 23, 24 und 25) verbundenen Linktyp;
Linktypermittlungsmittel (37) zum Ermitteln eines Linktyps, durch den das von der Paketweiterlungsvorrichtung (20, 21, 22, 23, 24 und 25) empfangene Paket läuft, wenn eine Nächster-Fluss-Erkennungsbenachrichtigung von der Paketweiterleitungsvorrichtung (20, 21, 22, 23, 24 und 25) empfangen wird, auf der Basis der Kennung der Paketweiterleitungsvorrichtung (20, 21, 22, 23, 24 und 25) und der in der Nächster-Fluss-Erkennungsbenachrichtigung enthaltenen Portkennung und von in dem Paketweiterleitungsvorrichtung-Informationsspeichermittel (38) gespeicherten Informationen;
Pfadberechnungsmittel (35) zum Berechnen eines Kommunikationspfades für das Paket auf der Basis von Topologieinformationen über den von dem Linktypermittlungsmittel (37) ermittelten Linktyp;
Regelerzeugungsmittel (34) zum Erzeugen einer Paketweiterleitungsregel für jede Paketweiterleitungsvorrichtung (20, 21, 22, 23, 24 und 25) auf dem Kommunikationspfad; und
Regelübertragungsmittel (37) zum Übertragen der erzeugten Paketweiterleitungsregel zu jeder Paketweiterleitungsvorrichtung (20, 21, 22, 23, 24 und 25) auf dem Kommunikationspfad.

2. Kommunikationssystem nach Anspruch 1, wobei beim Herstellen einer Verbindung mit der Pfadsteuervorrichtung (10) das Informationsübertragungsmittel (45) jeder Paketweiterleitungsvorrichtung (20, 21, 22, 23, 24 und 25) der Pfadsteuervorrichtung (10) wenigstens die Kennung des eigenen Knotens, die Portkennung jedes Ports des eigenen Knotens und den mit jedem Port des eigenen Knotens verbundenen Linktyp übermittelt.

3. Kommunikationssystem nach Anspruch 1 oder 2, wobei die Pfadsteuervorrichtung (10) ferner Analysemittel (37) zum Analysieren von Kennwerten von Kommunikationsendgeräten zum Austauschen des Pakets auf der Basis von in der Nächster-Fluss-Erkennungsbenachrichtigung enthaltenen Informationen über das Paket beinhaltet, und
das Pfadberechnungsmittel (35) einen Kommunikationspfad gemäß den Kennwerten der Kommunikationsendgeräte auf der Basis von Topologieinformationen über den von dem Linktypermittlungsmittel (37) ermittelten Linktyp berechnet.

4. Kommunikationssystem nach einem der Ansprüche 1 bis 3, wobei
die Pfadsteuervorrichtung (10) ferner Analysemittel (37) zum Analysieren einer Art von Anwendungssoftware beinhaltet, die auf Kommunikationsendgeräten zum Austauschen des Pakets auf der Basis von in der Nächster-Fluss-Erkennungsbenachrichtigung enthaltenen Informationen über das Paket beinhaltet, und
das Pfadberechnungsmittel (35) einen Kommunikationspfad gemäß der Art von auf den Kommunikationsendgeräten benutzter Anwendungssoftware auf der Basis von Topologieinformationen über den von dem Linktypermittlungsmittel (37) ermittelten Linktyp berechnet.

5. Pfadsteuerverfahren, **dadurch gekennzeichnet, dass** es Folgendes beinhaltet:
Bewirken, dass jede aus einer Mehrzahl von Paketweiterleitungsvorrichtungen (20, 21, 22, 23, 24 und 25) zum Weiterleiten eines empfangenen Pakets zu einer Pfadsteuervorrichtung (10) wenigstens eine Kennung ihres eigenen Knotens, eine Portkennung jedes Ports des eigenen Knotens und einen Typ der mit jedem Port des eigenen Knotens verbundenen Link überträgt;
Bewirken, dass die Pfadsteuervorrichtung (10) jede Paketweiterleitungsvorrichtung (20, 21, 22, 23, 24 und 25) steuert, um für jede Paketweiterleitungsvorrichtung (20, 21, 22, 23, 24 und 25) wenigstens die Kennung der Paketweiterleitungsvorrichtung (20, 21, 22, 23, 24 und 25), die Portkennung jedes Ports der Paketweiterleitungsvorrichtung (20, 21, 22, 23, 24 und 25) und den Typ der mit jedem Port der Paketweiterleitungsvorrichtung (20, 21, 22, 23, 24 und 25) verbundenen Link in einem Paketweiterleitungsvorrichtungs-Informationsspeichermittel (38) zu speichern;
Bewirken, dass die Paketweiterleitungsvorrichtung (20, 21, 22, 23, 24 und 25) zur Pfadsteuervorrichtung (10) eine Nächster-Fluss-Erkennungsbenachrichtigung einschließlich Informationen über das Paket, der Kennung des eigenen Knotens und der Portkennung eines Ports überträgt, an dem das Paket empfangen wurde, wenn keine an das empfangene Paket angepasste Paketweiterleitungsregel registriert ist; und
Bewirken, dass die Pfadsteuervorrichtung (10) Folgendes durchführt:
Ermitteln eines Linktyps, durch den das von der Paketweiterleitungsvorrichtung (20, 21, 22, 23, 24 und 25) empfangene Paket läuft, wenn die Nächster-Fluss-Erkennungsbenachrichtigung empfangen wird, auf der Basis der Kennung der Paketweiterleitungsvorrichtung (20, 21, 22, 23, 24 und 25) und der in der Nächster-Fluss-Erkennungsbenachrichtung enthaltenen Portkennung, und von in dem Paketweiterleitungsvorrichtungs-Informationssteuermittel (38) gespeicherten Informationen,
Berechnen eines Kommunikationspfades für das Paket auf der Basis von Topologieinformationen über den ermittelten Linktyp,
Erzeugen einer Paketweiterleitungsregel für jede Paketweiterleitungsvorrichtung (20, 21, 22, 23, 24 und 25) auf dem Kommunikationspfad, und
Übertragen der erzeugten Paketweiterleitungsregel zu jeder Paketweiterleitungsvorrichtung (20, 21, 22, 23, 24 und 25) auf dem Kommunikationspfad.

## Revendications

1. Système de communication comprenant :
une pluralité d'appareils d'expédition de paquet (20, 21, 22, 23, 24 et 25) pour expédier un paquet reçu; et
un appareil de contrôle de chemin (10) pour établir une règle d'expédition de paquet dans chaque appareil d'expédition de paquet (20, 21, 22, 23, 24 et 25) pour contrôler un chemin de communication pour le paquet,
chaque appareil d'expédition de paquet (20, 21, 22, 23, 24 et 25) comprend :
un moyen de transmission d'informations (45) pour transmettre à l'appareil de contrôle de chemin (10) au moins un identificateur de son propre noeud, un identificateur de port de chaque port du propre noeud et un type de lien connecté à chaque port du propre noeud; et
un moyen de notification de détection de nouveau flux (43) pour transmettre, à l'appareil de contrôle de chemin (10), une notification de détection de nouveau flux incluant des informations sur le paquet, l'identificateur du propre noeud et l'identificateur d'un port auquel le paquet a été reçu lorsque aucune règle d'expédition de paquet adaptée au paquet reçu n'est enregistrée, et
l'appareil de contrôle de chemin (10) comprend :
un moyen de stockage d'informations des appareils d'expédition de paquet (38) pour stocker des informations reçues du moyen de transmission d'informations (45) de chaque appareil d'expédition de paquet (20, 21, 22, 23, 24 et 25);
un moyen de stockage d'informations de topologie (31) pour stocker des informations de topologie sur les appareils d'expédition de paquet (20, 21, 22, 23, 24 et 25) pour chaque type de lien connecté à chaque port de chaque appareil d'expédition de paquet (20, 21, 22, 23, 24 et 25);
un moyen de détermination de type de lien (37) pour déterminer un type de lien à travers lequel le paquet reçu par l'appareil d'expédition de paquet (20, 21, 22, 23, 24 et 25) passe en recevant une notification de détection de nouveau flux de l'appareil d'expédition de paquet (20, 21, 22, 23, 24 et 25), sur la base de l'identificateur de l'appareil d'expédition de paquet (20, 21, 22, 23, 24 et 25) et de l'identificateur de port inclus dans la notification de détection de nouveau flux et des informations stockées dans le moyen de stockage d'informations des appareils d'expédition de paquet (38);
un moyen de calcul de chemin (35) pour calculer un chemin de communication pour le paquet sur la base des informations de topologie sur le type de lien déterminé par le moyen de détermination de type de lien (37);
un moyen de création de règle (34) pour créer une règle d'expédition de paquet pour chaque appareil d'expédition de paquet (20, 21, 22, 23, 24 et 25) sur le chemin de communication; et
un moyen de transmission de règle (37) pour transmettre la règle d'expédition de paquet créée à chaque appareil d'expédition de paquet (20, 21, 22, 23, 24 et 25) sur le chemin de communication.

2. Système de communication selon la revendication 1, dans lequel lors de l'établissement d'une connexion avec l'appareil de contrôle de chemin (10), le moyen de transmission d'informations (45) de chaque appareil d'expédition de paquet (20, 21, 22, 23, 24 et 25) transmet, à l'appareil de contrôle de chemin, au moins l'identificateur de son propre noeud, identificateur de port de chaque port de son propre noeud et le type de lien connecté à chaque port de son propre noeud.

3. Système de communication selon la revendication 1 ou 2, dans lequel :
l'appareil de contrôle de chemin (10) comprend en outre un moyen d'analyse (37) pour analyser des caractéristiques des terminaux de communication pour échanger le paquet sur la base d'informations sur le paquet incluses dans la notification de détection de nouveau flux, et
le moyen de calcul de chemin (35) calcule un chemin de communication conformément aux caractéristiques des terminaux de communication sur la base des informations de topologie sur le type de lien déterminé par le moyen de détermination de type de lien (37).

4. Système de communication selon l'une quelconque des revendications 1 à 3, dans lequel :
l'appareil de contrôle de chemin (10) comprend en outre un moyen d'analyse (37) pour analyser un genre de logiciel d'application utilisé sur les terminaux de communication pour échanger le paquet sur la base d'informations sur le paquet incluses dans la notification de détection de nouveau flux, et
le moyen de calcul de chemin (35) calcule un chemin de communication conformément au genre de logiciel d'application utilisé sur les terminaux de communication sur la base d'informations de topologie sur le type de lien déterminé par le moyen de détermination de type de lien (37).

5. Procédé de contrôle de chemin caractérisé en comprenant :
faire que chacun d'une pluralité d'appareils d'expédition de paquet (20, 21, 22, 23, 24 et 25) pour expédier un paquet reçu, transmette, à un appareil de contrôle de chemin (10), au moins un identificateur de son propre noeud, un identificateur de port de chaque port du propre noeud et un type de lien connecté à chaque port du propre noeud;
faire que l'appareil de contrôle de chemin (10) pour contrôler chaque appareil d'expédition de paquet (20, 21, 22, 23, 24 et 25), stocke, pour chaque appareil d'expédition de paquet (20, 21, 22, 23, 24 et 25), au moins l'identificateur de l'appareil d'expédition de paquet (20, 21, 22, 23, 24 et 25), l'identificateur de port de chaque port de l'appareil d'expédition de paquet (20, 21, 22, 23, 24 et 25) et le type de lien connecté à chaque port de l'appareil d'expédition de paquet (20, 21, 22, 23, 24 et 25) dans le moyen de stockage d'informations des appareils d'expédition de paquet (38);
faire que l'appareil d'expédition de paquet (20, 21, 22, 23, 24 et 25), transmette, à l'appareil de contrôle de chemin (10), une notification de détection de nouveau flux incluant des informations sur le paquet, identificateur de son propre noeud et identificateur de port d'un port auquel la paquet a été reçu lorsque aucune règle d'expédition de paquet adaptée au paquet reçu n'est enregistrée; et
faire que l'appareil de contrôle de chemin (10)
détermine un type de lien à travers lequel le paquet reçu par l'appareil d'expédition de paquet (20, 21, 22, 23, 24 et 25) passe en recevant la notification de détection d'un nouveau flux, sur la base de l'identificateur de l'appareil d'expédition de paquet (20, 21, 22, 23, 24 et 25) et de identificateur de port inclus dans la notification de détection de nouveau flux et des informations stockées dans le moyen de stockage d'informations des appareils d'expédition de paquet (38),
calcule un chemin de communication pour le paquet sur la base des informations de topologie sur le type de lien déterminé,
crée une règle d'expédition de paquet pour chaque appareil d'expédition de paquet (20, 21, 22, 23, 24 et 25) sur le chemin de communication, et
transmette la règle d'expédition de paquet créée à chaque appareil d'expédition de paquet (20, 21, 22, 23, 24 et 25) sur le chemin de communication.
